(19) Europäisches Patentamt
European Patent Office
Office européen des brevets

(11) **EP 4 611 209 A1**

(12) **EUROPÄISCHE PATENTANMELDUNG**

(43) Veröffentlichungstag:
**03.09.2025   Patentblatt 2025/36**

(21) Anmeldenummer: **25160953.3**

(22) Anmeldetag: **28.02.2025**

(51) Internationale Patentklassifikation (IPC):
**H02J 3/46** *(2006.01)*      **H02J 3/00** *(2006.01)*

(52) Gemeinsame Patentklassifikation (CPC):
**H02J 3/001; H02J 3/46;** H02J 2203/10;
H02J 2203/20

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität:  **01.03.2024   DE 102024106047**

(71) Anmelder:
• **Schleswig-Holstein Netz GmbH
  25451 Quickborn (DE)**
• **E.ON SE
  45131 Essen (DE)**
• **Rheinisch-Westfälische Technische Hochschule
  Aachen, Körperschaft des öffentlichen Rechts
  52062 Aachen (DE)**

(72) Erfinder:
• **Pohl, Oliver
  22399 Hamburg (DE)**
• **Böttcher, Luis
  52062 Aachen (DE)**
• **Bouchkati, Sarra
  52062 Aachen (DE)**
• **Klein-Helmkamp, Florian
  52062 Aachen (DE)**
• **Mahjooob, Amirali
  52062 Aachen (DE)**
• **Wolf, Hinrikus
  52062 Aachen (DE)**
• **Lutat, Philipp
  52062 Aachen (DE)**

(74) Vertreter: **Bals & Vogel Patentanwälte PartGmbB
Konrad-Zuse-Str. 4
44801 Bochum (DE)**

(54) **TRAININGSVERFAHREN ZUM TRAINIEREN EINES KÜNSTLICHEN NEURONALEN NETZES FÜR EIN NETZÜBERGABEMODUL, NETZÜBERGABEMODUL, NETZSTATION UND EIN BETRIEBSVERFAHREN ZUM BETREIBEN EINER NETZSTATION**

(57) Die Erfindung betrifft ein Trainingsverfahren zum Trainieren eines künstlichen neuronalen Netzes (KNN) für ein Netzübergabemodul (10) zum Einsatz in einer Netzstation (100), insbesondere in Form einer Ortsnetzstation oder eines Umspannwerks,
wobei das künstliche neuronale Netz (KNN) mithilfe von synthetischen Trainingsdaten (SD) trainiert wird, die dazu dienen, mögliche Netzzustände im Betrieb des Netzabschnittes (A) abzubilden und Steuerbefehle (SB) in dem Netzabschnitt (A) zu bestimmen,
wobei nur ausgewählte Teile der synthetischen Trainingsdaten (SD) zum Training des künstlichen neuronalen Netzes (KNN) verwendet werden,
um die Steuerbefehle (SB), insbesondere trotz unvollständiger Zustandsdaten, vorzugsweise ohne eine Zustandsschätzung (SE) im Netzabschnitt (A), nachzubilden und somit kritische Netzzustände, umfassend Strom- und/oder Spannungsabweichungen, insbesondere Überstrom, Überspannung und/oder Unterspannung, zu vermeiden.

Fig. 3

**Beschreibung**

Die Erfindung betrifft ein Trainingsverfahren zum Trainieren eines künstlichen neuronalen Netzes für ein Netzübergabemodul zum Einsatz in einer Netzstation, insbesondere in Form einer Ortsnetzstation oder eines Umspannwerks, vorzugsweise für ein Niederspannungsnetz und/oder ein Mittelspannungsnetz. Ferner betrifft die Erfindung ein korrespondierendes Netzübergabemodul mit einem entsprechend trainierten künstlichen neuronalen Netz. Weiterhin betrifft die Erfindung eine korrespondierende Netzstation, insbesondere in Form einer Ortsnetzstation oder eines Umspannwerks, vorzugsweise für ein Niederspannungsnetz und/oder ein Mittelspannungsnetz, mit einem entsprechenden Netzübergabemodul. Des Weiteren betrifft die Erfindung ein Betriebsverfahren zum Betreiben einer Netzstation, insbesondere in Form einer Ortsnetzstation oder eines Umspannwerks, vorzugsweise für ein Niederspannungsnetz und/oder ein Mittelspannungsnetz, mithilfe von einem entsprechenden Netzübergabemodul.

Für die Steuerung von Marktteilnehmern bzw. Netzknoten in einem Stromnetz werden automatisierte Verfahren benötigt. Eine Steuerung kann Messdaten in dem Stromnetz sammeln und Steuerbefehle generieren, die an die Netzknoten gesendet und dort umgesetzt werden. Bekannte Verfahren erfordern für eine solche Steuerung eine Zustandsschätzung (eng. "state estimation" oder kurz SE) von gegenwärtigen Zustandsdaten im Netz. In Kenntnis von gegenwärtigen Zustandsdaten können optimale Lastflussparameter mithilfe einer Optimierung mehrerer Lastflussparameterberechnungen (eng. "optimal power flow" oder kurz OPF) berechnet werden. Aus diesen Lastflussparametern werden vorzugsweise in einem weiteren Schritt Steuerungsbefehle für die einzelnen Netzknoten ermittelt.

Bekannte Verfahren weisen verschiedene Nachteile auf. Zum einen ist der benötigte Rechenaufwand für die Zustandsschätzung und anschließende Lastflussparameterberechnung hoch, sodass eine Implementierung in einem Netzknoten am Rande des Netzes, der eine Steuereinheit mit beschränkter Speicher- und/oder Rechenkapazität aufweist, nicht zu realisieren ist. Des Weiteren benötigt eine Zustandsschätzung eine minimale Anzahl an Messungen, um eine zuverlässige Schätzgüte zu generieren. Gibt es nicht hinreichend Messungen im Netz, muss ein drittes Verfahren, üblicherweise eine sog. Pseudo-Wertberechnung (oder kurz PW) zur synthetischen Messwertschätzung implementiert werden, die die Güte bzw. Genauigkeit der Steuerbefehle weiter senkt. Ferner produziert jedes der drei Verfahren (Pseudo-Wertberechnung PW + Zustandsschätzung SE + Lastflussparameterberechnung OPF) Schätzfehler. Insbesondere die Qualität der Zustandsschätzung wird bei geringer Messwertdichte sowie unpassender Messwertaufnahme im Netz zunehmend schlechter. Bekannte Verfahren zur Lastflussoptimierung sind bei kritischen Netzzuständen, entweder ungenau (z. B. bei starken Spannungsbandeinbrüchen oder Betriebsmittelüberlastungen am Rande des Netzes), unperformant oder liefern aufgrund von Konvergenzproblemen keine Ergebnisse. Durch die Kopplung der drei Verfahren kann es zu kaum abschätzbaren Fehlerfortpflanzungen kommen. Zuletzt sind die optimalen Lastflussparameter in eine funktionierende Regelung, also insbesondere einer Abfolge von Steuerbefehlen, zu überführen, was einen weiteren komplexen Schritt in der klassischen Regelung bei unvollständiger Messwertdurchsetzung darstellt.

Aufgabe der Erfindung ist daher, ein Trainingsverfahren zum Trainieren eines künstlichen neuronalen Netzes für ein Netzübergabemodul zum Einsatz in einer Netzstation, insbesondere in Form einer Ortsnetzstation oder eines Umspannwerks, vorzugsweise für ein Niederspannungsnetz und/oder ein Mittelspannungsnetz, bereitzustellen. Insbesondere ist es Aufgabe der Erfindung, ein verbessertes Netzübergabemodul für eine Netzstation bereitzustellen, welches eine verbesserte und effizientere Steuerung mit nur wenigen Messpunkten ermöglicht. Vorzugsweise ist es Aufgabe der Erfindung, ein intelligentes Netzübergabemodul für eine Netzstation bereitzustellen, welches eine verbesserte Steuerung von Netzknoten mit wenig Rechenaufwand schnell und zuverlässig ermöglicht. Bevorzugt ist es Aufgabe der Erfindung, ein modular ausgeführtes, einzeln handhabbares Modul zu schaffen, welches flexibel an unterschiedlichen Netzstationen im Bereich einer Niederspannung und/oder im Bereich einer Mittelspannung eingesetzt werden kann, um eine verbesserte Steuerung von Netzknoten mit nur wenigen Messpunkten zu ermöglichen. Weiterhin ist es Aufgabe der Erfindung, eine verbesserte Netzstation, insbesondere in Form einer Ortsnetzstation oder eines Umspannwerks, mit einem entsprechenden Netzübergabemodul zur Verfügung zu stellen. Des Weiteren ist es Aufgabe der Erfindung, ein verbessertes Betriebsverfahren zum Betreiben einer Netzstation, insbesondere in Form einer Ortsnetzstation oder eines Umspannwerks, mit einem entsprechenden Netzübergabemodul zur Verfügung zu stellen.

Die Aufgabe wird gelöst durch: ein Trainingsverfahren zum Trainieren eines künstlichen neuronalen Netzes für ein Netzübergabemodul zum Einsatz in einer Netzstation, insbesondere in Form einer Ortsnetzstation oder eines Umspannwerks, vorzugsweise für ein Niederspannungsnetz und/oder ein Mittelspannungsnetz, mit den Merkmalen des unabhängigen Verfahrensanspruches. Ferner betrifft die Erfindung ein korrespondierendes Netzübergabemodul, eine korrespondierende Netzstation und ein korrespondierendes Betriebsverfahren zum Betreiben einer Netzstation mit den Merkmalen der nebengeordneten Ansprüche. Dabei gelten Merkmale und Details, die im Zusammenhang mit den unterschiedlichen Ausführungsformen und/oder Aspekten der Erfindung beschrieben sind, selbstverständlich auch im Zusammenhang mit den anderen Ausführungsformen und/oder Aspekten und jeweils umgekehrt, sodass bezüglich der Offenbarung zu den einzelnen Ausführungsformen und/oder Aspekten stets wechselseitig Bezug genommen wird bzw. werden kann.

Die Erfindung stellt ein Trainingsverfahren zum Trainieren eines künstlichen neuronalen Netzes für ein Netzübergabemodul zum Einsatz in einer Netzstation, insbesondere in Form einer Ortsnetzstation oder eines Umspannwerks, vorzugsweise für ein Niederspannungsnetz und/oder ein Mittelspannungsnetz, bereit.

Das (Trainings- und/oder Betriebs-)Verfahren kann dabei (zumindest teilweise) computerimplementiert sein und/oder wiederholt durchgeführt werden. Vorteilhafterweise kann bei dem Verfahren zumindest einer der beschriebenen Schritte durchgeführt werden, wobei die Schritte bevorzugt nacheinander in der angegebenen Reihenfolge oder alternativ in einer abweichenden beliebigen Reihenfolge durchgeführt werden, und ggf. auch einzelne Schritte wiederholt werden können. Vorzugsweise kann das Verfahren bei, vor und/oder (bevorzugt) vor und/oder während eines Betreibens bzw. einer Benutzung eines elektrischen Netzes und/oder eines Netzübergabemoduls durchgeführt werden. Es kann vorgesehen sein, dass das Verfahren zumindest teilweise im Rahmen einer Inbetriebnahme und/oder Wartung durchgeführt wird. Es ist denkbar, dass das Verfahren beispielsweise durchgeführt wird, während ein elektrisches Netz geplant, gebaut und/oder gewartet wird. Dabei kann ein Computer das Verfahren (zumindest teilweise) implementieren, beispielsweise durch (kombiniertes) Durchführen der (oben genannten) Schritte und/oder Ansteuern und/oder Regeln entsprechender Komponenten (z. B. der Netzknoten). Durch das Verfahren können somit insbesondere Kosten, Sicherheit, Flexibilität, Umweltfreundlichkeit und/oder Robustheit (beim Betreiben von elektrischen Netzen) optimiert werden.

Die Netzstation kann verschiedene Netzknoten, umfassend unterschiedliche Verbraucher und/oder unterschiedliche Energieerzeuger, in einem Netzabschnitt (kann ebenfalls als ein Stromnetzabschnitt bezeichnet werden) verbinden.

Das Netzübergabemodul kann eine Kommunikationseinheit zum Erhalten von Betriebsparametern von den verschiedenen Netzknoten (etwa über jeweilige Datenverbindungen und/oder [elektrische] Leitungen), eine Speichereinheit, in welcher ein, insbesondere offline und/oder in einem (zentralen) Rechenzentrum, vorzugsweise mithilfe eines Verfahrens zum bestärkenden Lernen, trainiertes künstliches neuronales Netz, hinterlegt ist, und eine Recheneinheit aufweisen, welche dazu ausgeführt ist, die (als Input, insbesondere an/in das künstliche neuronale Netz, eingegebenen) Betriebsparameter mithilfe des künstlichen neuronalen Netzes zu verarbeiten und um (optimale) Steuerbefehle, umfassend bspw. (optimale) Steuerparameter und/oder Stellgrößen, für die verschiedenen Netzknoten bereitzustellen. Durch die Steuerbefehle kann, insbesondere bei einem Betriebsverfahren und/oder während der Anwendung, ein Betreiben des Netzstation und/oder der (damit verbundenen) Netzknoten und/oder (Teil-)Netze durchgeführt werden (siehe unten).

Die Betriebsparameter können eine Leistung, insbesondere eine Wirkleistung und/oder eine Blindleistung, einen Strom, eine Spannung und/oder einen Phasenwinkel an elektrischen Leitungen aufweisen, die die verschiedenen Netzknoten verbinden. Dabei können die Betriebsparameter jeweils skalare und/oder komplexe Werte aufweisen. Die Betriebsparameter können bevorzugt als (1D) Vektor bereitgestellt und/oder als Input für das künstliche neuronale Netz, insbesondere im Rahmen des Trainingsverfahrens und/oder Betriebsverfahrens, verwendet werden. Demnach kann bevorzugt die erste Schicht des künstlichen neuronalen Netzes eine Anzahl an Neuronen (bzw. Knoten des kNN) aufweisen, die der Anzahl der Betriebsparameter und/oder der Netzknoten (des elektrischen Netzes) entspricht. Beispielsweise kann können 50 Netzknoten vorliegen, für welche jeweils (für einen konkreten diskreten Zeitschritt) ein Betriebsparameter (oder ein Satz von Betriebsparameter, z. B. Spannung und Strom in komplexer Notation) bereitgestellt wird.

Die Steuerparameter können eine Leistung, insbesondere eine Wirkleistung und/oder eine Blindleistung, einen Strom, eine Spannung und/oder einen Phasenwinkel an korrespondierenden Leitungen aufweisen.

Die Stellgrößen können Schalterstellungen und/oder Leistungsstufen aufweisen. Diese können für die Netzknoten und/oder Leitungen spezifisch sein.

Gemäß dem Verfahren wird das künstliche neuronale Netz mithilfe von synthetischen Trainingsdaten trainiert, die dazu dienen, mögliche Netzzustände im Betrieb des Netzabschnittes abzubilden und (optimale) Steuerbefehle in dem Netzabschnitt zu bestimmen, wobei nur ausgewählte Teile der synthetischen Trainingsdaten zum Training des künstlichen neuronalen Netzes verwendet werden, um mit den (optimalen) Steuerbefehlen, vorzugsweise ohne eine Zustandsschätzung im Netzabschnitt, direkt kritische Netzzustände, umfassend Strom- und/oder Spannungsabweichungen, insbesondere Überstrom, Überspannung und/oder Unterspannung, zu vermeiden.

Somit kann ein Verfahren zur automatischen Generierung und Übertragung von Steuerbefehlen für steuerbare Marktteilnehmer bzw. Netzknoten eines Netzabschnittes auf Basis einer eingeschränkten (und geringen) Anzahl von verfügbaren Messwerten bereitgestellt werden.

Das Verfahren kann vorteilhafterweise dazu genutzt werden, um einen bestimmten Betriebsplan, beispielsweise umfassend (vordefinierte) Betriebsparameter und/oder Lastgrenzen (z. B. bezüglich elektrischer Leistung), innerhalb des Netzabschnittes einzuhalten.

Das Verfahren kann vorteilhafterweise dazu genutzt werden, um einen autonomen Netzbetrieb des Netzabschnittes zu ermöglichen, insbesondere im Rahmen des Betriebsverfahrens. Für diesen Zweck kann an den Übergabestellen ein Stromfluss von 0 anvisiert werden.

Vorzugsweise kann das Verfahren dazu dienen, die Steuerung derart zu gestalten, dass es zu keinen Engpässen, keinen Strom- und/oder Spannungsabweichungen, insbesondere zu keinem Überstrom, zu keiner Überspannung und/oder zu keiner Unterspannung im Netz kommt. Vorteilhafterweise können mithilfe des Verfahrens solche Engpässe dynamisch identifiziert und behoben werden, sodass ein zuverlässiger Netzbetrieb gewährleistet werden kann. Beispielsweise können die Steuerbefehle spezifisch sein für ein Abschalten und/oder eine Leistungsreduktion, insbesondere wenn (etwa bei unverändertem Betrieb) ungewünschte Strom- und/oder Spannungsabweichungen erfolgen würden.

Insbesondere kann das Verfahren ermöglichen, dass eine Koordination von Steuerbefehlen für einen engpassfreien Betrieb individueller Netzabschnitte bzw. Stromnetze durchgeführt werden kann.

Das vorgeschlagene Netzübergabemodul kann an verschiedenen Orten des Stromnetzes implementiert werden, z. B. in Ortsnetzstationen bzw. Kabelverteilerschränken (für die Steuerung von Niederspannungsnetzen) oder Umspannwerken (für die Steuerung von Mittelspannungsnetzen).

Das Verfahren ermöglicht ein adaptives Erlernen verschiedener Netzgebiete, sowie die Anpassung an sich ändernde Versorgungsaufgaben, insbesondere durch Erweiterung des synthetisch generierten Datensatzes.

Das Verfahren ermöglicht eine verbesserte Koordination von Steuerbefehlen trotz unvollständiger Informationen über die Betriebsparameter an verschiedenen Netzknoten und/oder an unterschiedlichen (Verbindungs-)Leitungen, d. h. trotz unvollständiger Zustandsdaten im Netzabschnitt.

Auf diese Weise kann berücksichtigt werden, dass in Nieder- und Mittelspannungsnetzen keine vollständige und/oder ausreichende messtechnische Erfassung des Netzzustands erfolgen kann, umfassend z. B. Leistung, Strom, Spannung an jeder technischen Einheit im Netz. Das Verfahren ermöglicht insbesondere eine vorteilhafte Anwendung und Steuerung bzw. Regelung im Echtzeit-Netzbetrieb. Das Verfahren kann insbesondere bei minimaler messtechnischer Erfassung eingesetzt werden, wobei ggf. die Qualität des Verfahrens transparent über gängige Validierungsverfahren getestet werden kann.

Dieses Verfahren kann somit im aktiven Netzbetrieb eingesetzt werden, um netzdienliche Steuerbefehle an die (an das Netz angeschlossene) Netzknoten zu senden. Die Steuerbefehle (als Output) werden, vorzugsweise unter unvollständigen Messinformationen aus dem Netzabschnitt, durch das speziell dazu trainierte künstliche neuronale Netz bestimmt und mittels der Recheneinheit und Kommunikationseinheit an die Netzknoten übermittelt, welche insbesondere anschließend in Abhängigkeit von den Steuerbefehlen betrieben werden. So können beispielsweise entsprechende Stellgrößen an und/oder für einen Netzknoten realisiert und/oder implementiert werden.

Das Netzübergabemodul kann als "Grid Cube" bezeichnet werden. Vorteilhafterweise kann ein Netzübergabemodul im Allgemeinen als ein Übertragungsgerät ohne besondere Anforderungen an Rechenleistung bzw. Speichervermögen umgesetzt werden, da nur das trainierte künstliche neuronale Netz dort gespeichert, implementiert, verwendet und/oder ausgewertet werden muss. Das Netzübergabemodul kann standardmäßig ausgeführt und in verschiedenen Netzstationen verbaut werden, um dort die gewünschte Steuerung und/oder Regelung zu implementieren.

Im Training kann eine Inferenz der Parameter des (künstlichen) neuronalen Netzes durchgeführt werden. Letztere können dem (künstlichen) neuronalen Netz zugeführt werden, wonach durch (vorwärts-) Auswertung des neuronalen Netzes unter Eingabe der reduzierten Eingangsdaten (Betriebsparametern) optimale Steuerbefehle (Steuerparameter und/oder Stellgrößen) generiert werden. Dabei können die Steuerbefehle innerhalb einer Regelung bzw. zum Regeln verwendet werden.

Vorteilhafterweise kann diese (vorwärts-) Auswertung um Größenordnungen schneller ausgeführt sein als Optimierungsverfahren, die für die Verfahren (Pseudo-Wertberechnung PW, Zustandsschätzung SE und/oder Lastflussparameterberechnung OPF sowie anschließende Regelung) benötigt werden. Mittels der Ergebnisse der Auswertung können anschließend Steuerbefehle für die Netzknoten und/oder steuerbaren Einheiten im Netz abgeleitet und an die Kommunikationseinheit übergeben werden, insbesondere bevor die nächsten Messdaten aus dem Netz wieder dem trainierten Modell zur Auswertung übergeben werden.

Für eine geregelte Abfolge der Messdatenerfassung und Steuerbefehlsübermittlung kann im Training eine Parametrierung der zu berücksichtigenden Latenzen durchgeführt werden. Die Parametrierung kann bspw. so erfolgen, dass es ermöglicht wird, den Regelkreis durch inkrementelle Steuerbefehle einzuschwingen.

Diese "vorsichtige" und "vorausschauende" Steuerung bzw. Regelung kann vom Netzübergabemodul im Training explizit gelernt werden.

Als Steuerparameter können sowohl Wirkleistungen als auch Blindleistungen verwendet werden. Diese können innerhalb eines kontinuierlichen Wertebereichs übermittelt werden. Weiterhin kommen als Stellgrößen Schaltsignale in Betracht, welche eine diskrete Schalthandlung im Netz abbilden können.

Das Training bzw. der Lernprozess kann unter Zuhilfenahme einer Umgebung erfolgen, in der der zu steuernde Netzabschnitt simuliert wird und somit vollständige synthetische Messdaten vorliegen. Das Lernverfahren erfolgt vorzugsweise nur unter Bereitstellung von einem ausgewählten Teil an synthetischen Zeitreihen für ausgewählte Knoten. So kann explizit ein Lernprozess mit unvollständiger Simulation erzeugt werden.

Der ausgewählte Teil der Netzknoten kann an die im Netz real beobachtbaren messbaren Knoten angepasst werden, um so die Realität möglichst genau abzubilden. Durch ein solches Training kann das Verfahren implizit Engpässe, wie bspw. Spannungsbandverletzungen und Betriebsmittelüberlastungen, erkennen und explizit lösen.

Insbesondere kann das Training auf die Steuerung unter unvollständigen Informationen vorbereitet werden.

Im Anschluss an den Lernprozess wird bevorzugt ein trainiertes künstliches neuronales Netz bereitgestellt, welches für das Betriebsverfahren, die Echtzeitanwendung und/oder im echten Netzbetrieb eingesetzt werden kann.

Das künstliche neuronale Netz kann vorteilhafterweise mithilfe eines nicht-überwachten Verfahrens trainiert werden (eng. "reinforcement learning", auf Deutsch bestärkendes Lernen oder verstärkendes Lernen).

Vorteilhafterweise können für das Training synthetische Trainingsdaten verwendet werden, bei welchen seltene kritische Netzzustände explizit synthetisch bzw. simulativ erstellt und berücksichtigt werden können. Zum anderen können individuelle Eigenschaften eines realen Netzabschnittes, wie z. B. eine Art und eine Anzahl an Messpunkten, vorhandene Topologien (Photovoltaik, Windenergie, E-Mobility, usw.), Spannungsebene, Betriebsmittel, usw. berücksichtigt werden, um eine hohe Güte der Modellentscheidung zu erreichen. Zuletzt können vorteilhafterweise zukünftige Szenarien in synthetische Trainingsdaten überführt werden und somit zukünftige Herausforderungen gelernt werden.

Ein weiterer Vorteil des nicht-überwachten Lernens kann darin liegen, eine selbstständige Erkennung ungültiger Zustände zu ermöglichen, was im Falle einer dezentralen Steuerung bzw. Regelung und Echtzeitanwendung einen erheblichen Vorteil gegenüber überwachten Lernmethoden darstellen kann.

Grundsätzlich ist es denkbar, dass das künstliche neuronale Netz mithilfe von synthetischen Trainingsdaten trainiert wird, die topologische Zustandsdaten im Betrieb des Netzabschnittes abbilden. Auf diese Weise kann ein Modell eines Netzabschnittes verwendet werden, um eine verbesserte Steuerung bzw. Regelung bereitzustellen, die vorzugsweise individuelle Eigenschaften eines realen Netzabschnittes auf eine verbesserte Weise berücksichtigt.

Wie oben bereits erwähnt, kann das künstliche neuronale Netz mithilfe von synthetischen Trainingsdaten trainiert werden, die unterschiedliche Netzzustände im Betrieb des Netzabschnittes abbilden. Demnach können als Trainingsdaten reale und/oder historische Betriebsparameter verwendet werden. Zusätzlich oder alternativ können synthetische Trainingsdaten verwendet werden, insbesondere simulierte und/oder synthetische Betriebsparameter. Diese können beispielsweise basierend auf Simulationen, z. B. durch Lastflussberechnungen eines Simulationsmodells (etwa eines Teilnetzes), ermittelt werden. Hierzu können im einfachsten Fall einzelne und/oder ein Teil der (von dem Simulationsmodell umfassten) Netzknoten als defekt (z. B. als elektrischer Kurzschluss und/oder Leerlauf) und/oder mit unerwarteten Betriebsparametern (z. B. Störgrößen, Spannungsschwankungen), welche z. B. anhand von historischen Netzereignissen bekannt sind, simuliert werden. Auf diese Weise bzw. durch Verwendung von synthetischen Trainingsdaten kann die Vielfalt von Trainingsdaten erweitert werden. Die Trainingsdaten können somit vorzugsweise mit ungewöhnlichen Daten ergänzt werden, die bspw. in solchen seltenen Fällen, insbesondere am Rande des Netzes und/oder in bestimmten extremen Wetterlagen, auftreten können, die insbesondere zu kritischen Netzzuständen führen können, umfassend Strom- und/oder Spannungsabweichungen, insbesondere Überstrom, Überspannung und/oder Unterspannung. Auf diese Weise kann das künstliche neuronale Netz nicht nur auf Normalbetrieb trainiert werden, sondern auch auf Fälle, die zwar selten vorkommen, aber im Hinblick auf die Betriebssicherheit besonders kritisch sind. Durch die (als Output) bereitgestellten (entsprechenden) Steuerbefehle kann das künstliche neuronale Netz gezielt dafür eingerichtet sein, (optimale) Steuer

Zudem ist es denkbar, dass die synthetischen Trainingsdaten mithilfe von Standardlastprofilen und/oder historischen Reallastprofilen des Netzabschnittes erstellt werden, die mithilfe von Zeitreihen und/oder stochastischen Verfahren vervielfacht werden, um insbesondere zeitlich korrelierte und/oder unkorrelierte Zustandsdaten zu erstellen. Auf diese Weise können erweiterte Trainingsdaten bereitgestellt werden.

Außerdem ist es denkbar, dass die synthetischen Trainingsdaten mithilfe eines einstellbaren Parameterdatensatzes erstellt werden, der bestimmte Umgebungsparameter, Wetter, Jahreszeit, Uhrzeit, usw. berücksichtigen kann, und/oder der bestimmte Topologien im Netzabschnitt berücksichtigen kann, insbesondere umfassend Photovoltaik, Windenergie, E-Mobility, usw. Auf diese Weise können individuelle Eigenschaften eines realen Netzabschnittes auf eine verbesserte Weise berücksichtigt werden.

Vorteilhafterweise können nur (d. h. begrenzte) bestimmte Teile der synthetischen Trainingsdaten ausgewählt werden, um das künstliche neuronale Netz zu trainieren, mit unvollständigen Zustandsdaten umgehen zu können und/oder dennoch bestimmte (optimale) Steuerbefehle zu erreichen, vorzugsweise ohne eine Zustandsschätzung im Netzabschnitt vorzunehmen. Auf diese Weise kann das künstliche neuronale Netz im Voraus auf Netzwerkausgestaltungen vorbereitet werden, die nicht viele Messpunkte aufweisen. Mit anderen Worten können einige wenige und/oder eine Teilmenge von Betriebsparametern (für ein Teilnetz) ausreichend sein, um diese als Input in das (trainierte) künstliche neuronale Netz einzugeben, und (dennoch) entsprechende Steuerbefehle (als Output) zu erhalten.

Insbesondere ist es denkbar, dass nur ein Teil in Höhe von 1% bis 20%, bspw. nur 10%, der synthetischen Trainingsdaten verwendet wird, um das künstliche neuronale Netz zu trainieren, mit unvollständigen Daten umgehen zu können und/oder dennoch bestimmte (optimale) Steuerbefehle zu erreichen. Auf diese Weise kann die vorgeschlagene Lösung sogar in Niederspannungsnetzen verwendet werden, die wenige Messpunkte aufweisen.

Vorzugsweise können den synthetischen Trainingsdaten seltene kritische Netzzustände gezielt aufgeprägt werden, um das künstliche neuronale Netz zu trainieren, mit kritischen Netzzuständen, umfassend Strom- und/oder Spannungsabweichungen, insbesondere Überstrom, Überspannung und/oder Unterspannung, umzugehen. Solche Trainingsdaten können nicht aus den normalen Betriebsdaten abgeleitet werden, da auf diese Weise die Betriebssicherheit einzelner Netzknoten nicht eingehalten werden kann, bspw. durch Engpässe oder Netzüberlastungen, die zumeist sehr selten vorkommen. Solche Trainingsdaten können auf eine vorteilhafte Weise simuliert (siehe z. B. oben) werden, um solche gefährlichen Betriebszustände zu erlernen und zuverlässig zu vermeiden.

Wie oben bereits erwähnt, können bei der Auswahl der synthetischen Trainingsdaten, die dem künstlichen neuronalen Netz zum Training angeboten bzw. dabei verwendet werden, vorhandene Messpunkte, Topologien (welche Arten an Verbrauchern und/oder Energieerzeugern vorhanden sind), Spannungsebenen (die typischerweise an bestimmten Netzknoten auftreten können) und/oder Betriebsmittel (Solaranlagen, Windkraftanlagen, Ladestationen für E-Mobilität usw.) im Netzabschnitt berücksichtigt werden. Auf diese Weise können typische und untypische Fälle im Betrieb von echten Netzabschnitten auf eine vorteilhafte Weise mit gezielt ausgewählten Trainingsdaten abgebildet werden.

Einfachheitshalber kann vorgesehen sein, dass bei der Auswahl der synthetischen Trainingsdaten, die dem künstlichen neuronalen Netz zum Training angeboten werden, die Zustandsdaten ausgewählt werden, die bestimmte Unterabschnitte des Netzabschnittes betreffen. Somit können bestimmte Unterabschnitte berücksichtigt werden, die typischerweise Messpunkte für Betriebsparameter umfassen können.

Nach einem besonderen Vorteil kann beim Trainieren des künstlichen neuronalen Netzes eine Parametrierung von Latenzen durchgeführt werden, um eine geregelte Abfolge der Messdatenerfassung und Steuerbefehlsübermittlung zu ermöglichen. Mit anderen Worten können die Zeitabstände zwischen Messdatenerfassung gemäß den Trainingsdaten und Steuerbefehlsübermittlung aufeinander abgestimmt werden. Auf diese Weise kann nicht nur eine Steuerung, sondern eine inkrementelle Steuerung bzw. Regelung ermöglicht werden, die sich schrittweise und/oder kontrolliert an (optimale) Steuerbefehle annähert. Insbesondere bedarf es in der Auswertung im Betrieb keines eigenen Steueralgorithmus bzw. -schemas. Die optimale Steuerung wird im Trainingsprozess gelernt und wird im Betrieb implizit durch die direkte Bestimmung der Steuerbefehle berücksichtigt.

Vorzugsweise können beim Trainieren des künstlichen neuronalen Netzes dem künstlichen neuronalen Netz mehrmals die gleichen ausgewählten Teile der synthetischen Trainingsdaten angeboten und/oder (als Input) eingespeist werden, wobei nur die Effekte der Steuerung Berücksichtigung in den Eingangsdaten erfahren. Damit wird eine zurückhaltende, rückgekoppelte und/oder feedbackbasierte Steuerbefehlserzeugung ermöglicht, und vorzugsweise eine schrittweise und/oder kontrollierte Annäherung an die bestimmten optimalen Regelgrößen ermöglicht. Auf diese Weise kann sichergestellt werden, dass ein Regelkreis durch das Training ermöglicht wird, der eine inkrementelle Steuerung bzw. Regelung im realen Betrieb des Netzabschnittes ermöglicht. Mit anderen Worten können im Training dem künstlichen neuronalen Netz mehrfach und/oder wiederholt identische und/oder ähnliche synthetische Trainingsdaten zugeführt werden. Dadurch kann das künstliche neuronale Netz durch das Training dazu eingerichtet werden die Auswirkungen der ermittelten Steuerbefehle, insbesondere in weiteren (zeitlichen) Iterationsschritten, zu ermitteln, um vorzugsweise dadurch die resultierenden Auswirkungen zu erfahren. So kann beispielsweise ein übermäßiges Steuern und/oder Regeln (quasi "Überreagieren") gezielt verhindert ("abtrainiert") werden.

Ferner kann vorgesehen werden, dass beim Trainieren des künstlichen neuronalen Netzes eine Zielfunktion verwendet wird, die Nutzen und/oder Kosten berücksichtigt. Die Nutzen können bspw. ein Vermeiden von kritischen Netzzuständen, umfassend Strom- und/oder Spannungsabweichungen, insbesondere Überstrom, Überspannung und/oder Unterspannung, beinhalten. Die Kosten können vorteilhafterweise von einer Blindleistung und/oder einer Wirkleistung im Betrieb des Netzabschnittes abhängen, um nicht nur die erforderliche Leistung für die Netzknoten zu optimieren, sondern auch eine Leistung, die tatsächlich bereitgestellt, aber möglicherweise nicht genutzt wird.

Die Zielfunktion kann bspw. als eine Bewertungsfunktion (bspw. für einen Echtbetrieb) und/oder eine Optimierungsfunktion (bspw. für ein selbstüberwachtes bzw. bestärkendes Lernen oder verstärkendes Lernen) verwendet werden.

Ein künstliches neuronales Netz kann eine informationstechnische Struktur darstellen, die durch entsprechendes Training eine funktionale Beziehung zwischen Input (z. B. Eingangsdaten in Form von Signalen und/oder Vektoren) und Output/Ausgang (z. B. umfassend einen Vektor) "erlernen" kann:

$$Output = f(Input).$$

Ein künstliches neuronales Netz kann (eine Vielzahl von) Neuronen (auch Knoten genannt) umfassen, die miteinander verbunden sind. Die Neuronen können in mehreren Schichten angeordnet sein. Eine erste Schicht und/oder Eingabeschicht kann aus Neuronen gebildet werden, der insbesondere die einzelnen Elemente des Inputs zur Verfügung gestellt werden. Jedem Neuron der Eingabeschicht wird vorzugsweise ein (einziges) Element des Inputs übergeben. Auf der Ausgabeseite kann das künstliche neuronale Netz eine Ausgabeschicht umfassen, deren Neuronen jeweils einzelne Elemente des Outputs darstellen. Zwischen der Eingabeschicht und der Ausgabeschicht können eine oder mehrere (versteckte) Schichten von (versteckten) Neuronen liegen. Die Neuronen der Eingabeschicht sind vorzugsweise mit allen oder ausgewählten Neuronen der zweiten Schicht bzw. ersten Schicht von versteckten Neuronen ("hidden layers") verbunden. Diese wiederum können mit allen oder ausgewählten Neuronen einer möglichen dritten Schicht bzw. zweiten Schicht von versteckten Neuronen verbunden sein, und so weiter. Die Neuronen der letzten Schicht (von verborgenen Neuronen) kann schließlich mit den Neuronen der Ausgabeschicht verbunden werden. Das Verhalten (und die Leistung/Performance) des künstlichen neuronalen Netzes und damit die Reaktion der Neuronen der Ausgabeschicht auf den Input, die an die Neuronen der Eingabeschicht angelegt werden, wird durch Trainingsparameter definiert. Diese Trainingsparameter stellen beispielsweise Schwellenwerte dar, bei deren Überschreitung ein Neuron ein Signal an ein nachfolgendes Neuron sendet, und/oder Gewichtungsfaktoren für die Wahrscheinlichkeit einer Signalübertragung zwischen zwei bestimmten nachfolgenden/aufeinanderfolgenden Neuronen. Zum Training (und/oder Anlernen) können verschiedene Methoden verwendet werden. Bei der "Multilayer-Perceptron"-Methode beispielsweise wird das neuronale Netzwerk zunächst mit einer Reihe von Inputs (z. B. im Vektorformat) und einer Reihe von Outputs (z. B. im Vektorformat) konfrontiert, von denen bekannt ist, dass sie mit den Eingabevektoren übereinstimmen. Die vom künstlichen neuronalen Netz berechneten Outputs können mit den vorgegebenen Outputs verglichen werden. Die Unterschiede zwischen den berechneten und den erwarteten Werten können ausgewertet und zur Änderung der Parameter, insbesondere der Gewichtungsfaktoren, des Berechnungsalgorithmus des neuronalen Netzwerks verwendet werden (auch als "Backpropagation" bezeichnet). Das Training ist abgeschlossen, sobald die Outputs bzw. Berechnungsergebnisse des künstlichen neuronalen Netzes mit ausreichender Genauigkeit (z. B. weniger als 1% Abweichung) mit den erwarteten Werten übereinstimmen. Die Trainingsphase kann insbesondere dann enden und/oder abgebrochen werden, wenn das Modell und/oder das Training konvergiert. Der mittlere absolute Fehler kann zwischen den vom trainierten Modell gelieferten Outputs/Ausgaben und Testdaten, für die die (reale) Prognose bekannt ist, berechnet werden. Wenn der mittlere absolute Fehler eine untere Grenze (z. B. von 1 %) erreicht, kann das Training als konvergiert betrachtet werden.

Das (trainierte) künstliche neuronale Netz kann z. B. von einem Computer, einer elektronischen Steuereinheit und/oder einem (größeren) Rechensystem (z. B. einer Serverfarm) durch/während einer Trainingsphase und/oder eines Trainings erstellt werden. Das künstliche neuronale Netz kann (in der Trainingsphase) trainiert werden, indem mit einer zufälligen Initialisierung des Modells, insbesondere der Gewichtungsfaktoren des künstlichen neuronalen Netzes, begonnen wird. Die Trainingsdaten können für das Training in einem nicht-flüchtigen Speichermedium gespeichert und/oder bereitgestellt sein. Die Trainingsdaten können dabei aufweisen bzw. unterteilt werden (z. B. in einem Verhältnis 70:20:10):

-    Daten die für das (tatsächliche) Anlernen verwendet werden. Dabei können Muster und/oder Beziehungen aus diesen Daten erlernt werden, indem Gewichtungsfaktoren (der Neuronen) angepasst werden (z. B. durch Backpropagation und/oder Gradient-Descent-Verfahren). Das künstliche neuronale Netz minimiert während des Trainings vorzugsweise eine Fehlerfunktion (wie z. B. den mittleren quadratischen Fehler oder den Kreuzentropieverlust/"cross-entropy-loss"). Dabei kann vorteilhafterweise das künstliche neuronale Netz umso besser verallgemeinern, je vielfältiger und/oder repräsentativer die Daten sind.

-    Validierungsdaten welche für eine Validierung, das "Fine-Tuning" und/oder ein Optimieren des künstlichen neuronalen Netzes eingerichtet sein können. Dabei kann insbesondere ein Anpassen von Hyperparametern (z. B. der Lernrate, Anzahl der Schichten und/oder Ausfallrate) erfolgen. Dadurch kann das Training und/oder die Performance verbessert werden. Dadurch kann vorteilhafterweise eine Überanpassung ("Overfitting") des künstlichen neuronalen Netzes verhindert werden. Das künstliche neuronale Netz kann, vorzugsweise nach jeder Epoche (des Trainings), über die Validierungsdaten bewertet werden, um eine Überanpassung zu erkennen und/oder zu verhindern.

-    Testdaten, die am Ende des Trainings (als Input) verwendet werden, um (anhand der Outputs) die Vorhersagefähigkeit und/oder Fähigkeit zur Verallgemeinerung (auch auf andere Testdaten) zu überprüfen. Die Testdaten werden vorzugsweise nicht zum Anlernen und/oder als Validierungsdaten verwendet. Vorzugsweise weisen die Testdaten allerdings eine ähnliche oder gleiche Wahrscheinlichkeitsverteilung auf wie die Daten für das Anlernen.

Das Training kann (mehrmals) wiederholt werden, beispielsweise 500 Mal, um mehrere (trainierte) künstliche neuronale Netze zu erhalten. Die Leistung dieser kann durch Eingabe (identischer) Testdaten, für die entsprechende (bzw. bekannte) Outputs (in diesem Fall z. B. [gewünschte und/oder optimale] Steuerbefehle) verfügbar sind, verglichen werden. Das trainierte künstliche neuronale Netz mit der besten Leistung kann dann später und/oder in der Anwendungsphase (als trainiertes künstliches neuronale Netz) verwendet werden.

Das künstliche neuronale Netz kann ein rekurrentes neuronales Netz ("recurrent neural network", RNN) umfassen/ein solches sein, insbesondere umfassend (nur) Long-Short-Term-Memory-(LSTM)-Zellen. Der Kern der LSTM-Architektur kann eine/die Speicherzelle(n) sein, die mehrere Gating-Mechanismen zur Steuerung des Informationsflusses verwendet. Vorzugsweise sind alle LSTM-Zellen identisch aufgebaut. Im Gegensatz zu einem einfachen RNN, das eine einzige Nicht-Linearität aufweist bzw. verwendet, umfasst eine LSTM-Zelle mehrere Komponenten, die es ihr zusammen ermöglichen, langfristige Abhängigkeiten, insbesondere von Zeitreihen, zu erfassen. So können beispielsweise die Inputs Zeitreihen(daten) aufweisen, z. B. vorliegend Betriebsparameter für [diskrete] aufeinanderfolgende Zeitpunkte). Entsprechend kann die Implementierung mit LSTM-Zellen im Rahmen der vorliegenden Erfindung besonders vorteilhaft sein. Hierbei kann insbesondere der Einfluss von geänderten Betriebsparametern (z. B. aufgrund von Steuerbefehlen) besonders gut modelliert werden. Diese können beispielsweise in einer (2D) Matrix bereitgestellt werden und/oder als (1D) Vektor verwendet werden (in welchem die Spalten der Matrix hintereinander/untereinander folgen, sog. "Konkatenation"). Jede LSTM-Zelle kann ein Vergessens/Forget-Gate umfassen, das so konfiguriert ist, dass es die Speicherung von Informationen aus dem vorherigen Zellzustand repräsentiert/reguliert. Es kann wie folgt berechnet werden:

$$\sigma_f[t] \ = \ \sigma(W_f \ \cdot \ x[t] \ + \ R_f \ \cdot \ y[t-1] \ + \ b_f)$$

wobei, insbesondere:

- $\sigma$ die Sigmoid-Aktivierungsfunktion umfasst,
- $W_f$ die Eingangs-Gewichtungs-Matrix für das Forget-Gate umfasst,
- $x[t]$ den Input (Eingangsvektor) zum Zeitpunkt t aufweist,
- $R_f$ eine rekurrente Gewichtungs-Matrix umfasst,
- $y[t-1]$ den Output des vorherigen Zeitschritts umfasst, und/oder
- $b_f$ einen Bias-Vektor für das Forget-Gate aufweist.

Ein Candidate-State kann einen potenziellen neuen Zellzustand vor den Änderungen durch das Forget-Gate und/oder Input-Gate darstellen. Ein Update-Gate kann so konfiguriert werden, dass es das Ausmaß bestimmt, in dem neue Informationen in den Zellzustand aufgenommen werden. Es können zwei Größen berechnet werden:

Candidate-State:

$$\hat{h}[t] \ = \ g_1(W_h \ \cdot \ x[t] \ + \ R_h \ \cdot \ y[t-1] \ + \ b_h)$$

Update-Gate:

$$\sigma_u[t] \ = \ \sigma(W_u \ \cdot \ x[t] \ + \ R_u \ \cdot \ y[t-1] \ + \ b_u)$$

wobei insbesondere:

- $g_1$ kann eine hyperbolische Tangensfunktion (tanh) implementieren/aufweisen,
- $W_h$ und $R_h$ können Gewichtungs-Matrizen für den Candidate-State aufweisen,
- $b_h$ kann den Bias-Vektor für den Candidate-State aufweisen, und/oder
- $W_u$, $R_u$, und $b_u$ können den Parametern des Input-Gats entsprechen.

Der neue Zellzustand kann durch Kombination des Candidate-State und des vorherigen Zellzustands berechnet werden, die jeweils durch die Input- und Forget-Gates vorgegeben bzw. moduliert werden:

$$h[t] \ = \ \sigma_u[t] \ \odot \ \hat{h}[t] \ + \ \sigma_f[t] \ \odot \ h[t-1]$$

Das Output-Gate kann so konfiguriert werden, dass es die an den Output weitergeleiteten Informationen kontrolliert/steuert:

$$\sigma_o[t] \ = \ \sigma(W_o \ \cdot \ x[t] \ + \ R_o \ \cdot \ y[t-1] \ + \ b_o)$$

und der endgültige Output der Zelle kann (folglich) sein:

$$y[t] \ = \ \sigma_o[t] \ \odot \ g_2(h[t])$$

**Dabei kann** $g_2$ die tanh-Funktion und/oder $\odot$ eine elementeweise Multiplikation umfasst. Durch diese Struktur können sich Fehlersignale über viele Zeitschritte t rückwärts ausbreiten, ohne zu verschwinden, was für die Erfassung langfristiger Abhängigkeiten sehr vorteilhaft sein kann. Folglich kann die Architektur langfristige Abhängigkeiten erfassen, die bei der Vorhersage bzw. Bestimmung von Steuerbefehlen von Vorteil sind.

Das Training kann durch Entfaltung des RNN über die Zeit und Anwendung des Backpropagation-Through-Time-Algorithmus (BPTT) durchgeführt werden. Aufgrund der zyklischen Natur des künstlichen neuronalen Netzes kann BPTT nach einer vorbestimmten Anzahl von Schritten ($\tau_b$) beendet werden, vorzugsweise um den Rechenaufwand zu beschränken und gleichzeitig Probleme im Zusammenhang mit verschwindenden oder explodierenden Gradienten ("exploding gradients") zu mildern. Die vorgegebene Anzahl von Schritten kann zum Beispiel Folgendes umfassen:

$$\tau_b = 45$$

Vorzugsweise werden ein Gradientenverfahren / Gradient-Descent-Verfahren, insbesondere ein stochastisches Gradient-Descent-Verfahren (SGD) mit Momentum, das Nesterov-Momentum und/oder ein adaptiver Adam-Optimierer verwendet.

Die obigen Gewichtungs-Matrizen ($W_f$, $W_h$, $W_u$, $W_o$) und die rekurrenten Matrizen ($R_f$, $R_h$, $R_u$, $R_o$) können vorzugsweise zusammen mit den entsprechenden Bias-Vektoren trainiert werden. Um dem Problem des verschwindenden Gradienten ("vanishing gradient") entgegenzuwirken, können die Gewichtungsfaktoren der Neuronen durch gleichmäßige Stichproben aus einem Intervall (z. B. [0, 1]) initialisiert und/oder (dann) mit $1/\sqrt{N_h}$ neu skaliert werden, wobei $N_h$ die Anzahl der versteckten Neuronen ist. Bei der LSTM-Implementierung kann die Anzahl der versteckten Neuronen (in den entsprechenden Schichten) beispielsweise $N_h = \{23, 34, 41, 56\}$ aufweisen.

Für L1- und L2-Regularisierungsterme können $\lambda 1$ und $\lambda 2$ unabhängig voneinander aus einem Intervall [0, 0.1] gewählt/gesampelt werden. Regularisierungstechniken, insbesondere L1- und L2- Regularisierungsterme, können gleichmäßig auf die Eingabe-, Rekurrent- und Ausgabe-Gewichtsmatrizen angewendet werden, um vorteilhafterweise eine Überanpassung zu verhindern. Die gleichen Eingangs- und rekurrenten Verbindungen können bei jedem Zeitschritt in der BPTT mit einer Dropout-Wahrscheinlichkeit $p_{drop}$ aus {0, 0.1, 0.2, 0.3, 0.5} ausgelassen werden. Wenn $p_{drop} \neq 0$, kann (zusätzlich) eine L2-Regularisierung angewendet werden. Diese Kombination kann zu einem geringeren Generalisierungsfehler führen.

Zusätzliche (Hyper-)Parameter können aufweisen:

- eine Anzahl von Epochen kann zwischen 1000 und 5000, vorzugsweise 2100, umfassen,
- eine Lernrate $\eta = 0.00719$,
- eine Anzahl der neuen Zeitschritte, die vor der Berechnung der BPTT verarbeitet werden kann $\tau_f = 25$ aufweisen,
- L1 Regularisierungsparameter $\lambda_1 = 0$, und/oder
- L2 Regularisierungsparameter $\lambda_2 = 0.0087$.

Weitere Informationen können auch unter folgendem Link (Stand 17. Februar 2025, 17:23 Uhr), insbesondere in den Kapiteln 10.10 bis 10.12, entnommen werden: https://www.deeplearningbook.org/contents/rnn.html

Das künstliche neuronale Netz kann auch angepasst und/oder neu trainiert werden, insbesondere durch Wiederholung des obigen Trainings, vorzugsweise auf der Grundlage neuer Betriebsparameter aus (zuletzt verwendeten) Zeitintervallen, für die das Ergebnis/die Grundwahrheit (später) bekannt ist. Folglich kann das Verfahren so konfiguriert werden, dass es selbstlernend ist.

Es kann alternativ oder zusätzlich auch vorgesehen sein, dass das künstliche neuronale Netz ein neuronales Netz aus Graphen aufweist (GNN, "graph neural network"). Dies kann vorliegend besonders vorteilhaft sein, da hierbei (quasi identisch bzw. analog) das elektrische Netz und/oder die Netzknoten in einem (korrespondierenden und/oder virtuellen) GNN abgebildet und/oder modelliert sind. Dies kann eine Implementierung und/oder eine erhöhte Genauigkeit bereitstellen, insbesondere da jeder einzelne Knoten detaillierter beim Berechnen berücksichtigt werden kann. Die Grundlagen des künstlichen neuronalen Netzes sind bereits oben beschrieben, insofern kann im Folgenden besonders Bezug genommen werden auf die Besonderheiten der Implementierung mit einem GNN.

Das GNN kann virtuell und/oder synthetisch modelliert werden. Hierbei kann eine Struktur des GNN (virtuell) entsprechend dem Netz bzw. der Netzknoten erfolgen (Topologie). Beispielsweise kann hierfür as PyTorch framework NetworkX und/oder PyTorch Geometric verwendet werden. Sofern nicht anders beschrieben, können dabei auch die voreingestellten Parameter von PyTorch verwendet werden. Es können (anfangs) synthetisch erzeugte Modelle des elektrischen Netzes konstruiert werden. Ein Modell kann dabei Graphen aufweise und/oder aus diesen aufgebaut sein:

$$G = (V, E)$$

Dabei können die Knoten $V$ die Netzknoten, beispielsweise Generatoren, Transformatoren und Verbraucher (siehe oben) aufweisen. Dabei können die Kanten $E$ die physischen Verbindungen bzw. Leitungen, beispielsweise Übertragungsleitungen, abbilden. Die Netzwerktopologie kann entweder aus realen Netzdaten bzw. Plänen abgeleitet oder durch algorithmische Verfahren synthetisch (synthetische Trainingsdaten) generiert werden, wobei insbesondere Kriterien wie Konnektivität und typische Knotengrade berücksichtigt werden. Anschließend kann für jedes Modell bzw. synthetische Netz eine dynamische Simulation - etwa unter Verwendung eines modifizierten Kuramoto-Modells mit Trägheit - durchgeführt werden, um ein Stabilitätsmaß, z. B umfassend Single-Node Basin Stability (SNBS), zu bestimmen. Dieses Stabilitätsmaß kann dient als Label für das spätere Training des Graph Neural Network (GNN) dienen. Alternativ oder zusätzlich kann die Zielfunktion (siehe unten) implementiert werden, wobei beispielsweise die Stabilität, insbesondere SNBS, als Nutzen parametrisiert werden kann. Parallel dazu können aus der Netzwerktopologie eine Adjazenzmatrix $A$ sowie eine Knoteneigenschaftsmatrix $X$ erstellt werden. Diese Matrizen werden mittels Standardisierungs- und Normierungsverfahren erstellt und in Trainings-, Validierungs- und Testdatensätze unterteilt (siehe oben), um vorteilhafterweise eine robuste Modellierung und Generalisierbarkeit zu gewährleisten. Im nächsten Schritt kann die Architektur erstellt und/oder das Training des GNN durchgeführt werden. Als Input bzw. Eingabedaten können die Knoteneigenschaftsmatrix X sowie die Adjazenzmatrix $A$ verwendet werden. Zur Stabilisierung der Berechnungen wird vorzugsweise die Adjazenzmatrix $A$ um Selbstschleifen erweitert, sodass insbesondere eine normalisierte Matrix

$$\tilde{A} = D^{-\frac{1}{2}} (A + I) D^{-\frac{1}{2}}$$

entsteht, wobei $D$ die Diagonalmatrix der Knotengrade und $I$ die Identitätsmatrix darstellt. Mehrere graph-konvolutionale Schichten (GCN-Layers) können diese Eingaben verarbeiten, indem sie sowohl lokale als auch globale Informationen aus dem Netz extrahieren. Beispielsweise kann die erste Schicht bzw. Eingangsschicht 50 Neuronen aufweisen (insbesondere bei einem Input aufweisend 50 Einträge bzw. Betriebsparameter). Weiterhin kann eine zweite und/oder dritte Schicht bzw. hidden-layer zwischen 40 und 120 Neuronen aufweisen, vorzugsweise zwischen 50 und 70, insbesondere 64. Es kann eine Ausgabeschicht folgen, insbesondere umfassend 50 Neuronen. So können beispielsweise für jeden (realen) Netzknoten ein Steuerparameter, eine (Soll-) Spannung und/oder ein (Soll-)Strom (um darauf basierend einen Steuerparameter zu ermitteln) ausgegeben werden. Dabei können (im Rahmen des Trainings) insbesondere (historische) Betriebsparameter und/oder Steuerparameter verwendet werden. Die Berechnung bzw. Transformation in jeder Schicht wird durch die Gleichung

$$H^{l+1} = \sigma(\tilde{A} H^l W^l)$$

beschrieben, wobei $H^{l+1}$ die Parametermatrix (der Neuronen) der I-ten Schicht, $W^l$ die (lernbaren und/oder anzupassenden) Gewichtungsmatrizen und $\sigma$ eine (nichtlineare) Aktivierungsfunktion (beispielsweise ReLU oder tanh) darstellt. Ergänzend werden insbesondere Regularisierungsterme bzw. Maßnahmen wie Dropout zur Vermeidung von Overfitting und/oder Batch-Normalisierungsschichten zur Stabilisierung der Verbindungen (zwischen den Schichten) eingesetzt. Residual-Verbindungen kommen zum Einsatz, um den verschwindenden Gradienten / "vanishing gradient"-Effekt in tieferen Schichten zu verringern und/oder optimieren. Die (finale) Ausgabeschicht des GNN liefert (als Output) vorzugsweise Steuerbefehle, welche insbesondere eingerichtet sind die Stabilität, insbesondere Zielfunktion und/oder SNBS zu optimieren und/oder für eine Klassifizierung der Netzknoten in stabile und instabile Bereiche (um über die Steuerbefehle dahingehend einzugreifen). Zur Optimierung der Modell- bzw. Hyperparameter wird insbesondere (bei Regressionsanwendungen) der Mean Squared Error (MSE) und/oder (bei Klassifikation) der Cross-Entropy-Loss verwendet, während die Optimierung mittels stochastischem Gradientenabstiegsverfahren (SGD) und/oder adaptiver Optimierer wie Adam durchgeführt wird. Die (relevanten) Hyperparameter, etwa Lernrate (z. B. [anfänglich] $\eta$ = 0.007), Batch-Größe (etwa zwischen 32 bis 128, z. B. 64) und Dropout-Rate (etwa zwischen 0.1 und 0.5, z. B. $p_{drop}$ = 0,13), werden anhand des Validierungsdatensatzes feinjustiert. Eine Anzahl von Epochen kann zwischen 2000 und 4000, vorzugsweise 2900, umfassen. Nach Abschluss des Trainings kann das GNN anhand von separaten Testdaten evaluiert werden, um dessen Performance und/oder Vorhersagegenauigkeit zu überprüfen. Hierbei werden bevorzugt statistische Kennzahlen wie der $R^2$-Wert oder der Mean Absolute Error herangezogen, um die Leistungsfähigkeit zu quantifizieren. Vorzugsweise kann dabei ein Transferlernen implementiert werden, das es ermöglicht, ein Modell, das auf kleineren Netzen (zum Beispiel mit 10 Knoten) trainiert wurde, auf größere Netze (beispielsweise mit 50 Knoten) zu übertragen, ohne dass ein vollständiges erneutes Trainieren erforderlich ist. Dies kann vorteilhafterweise die Adaptionsfähigkeit optimieren, beispielsweise wenn weitere (Teil-)Netze und/oder Netzknoten hinzukommen (ohne dass ein erneutes Trainieren direkt erfolgen müsste). Diese Skalierbarkeit und Übertragbarkeit können wesentliche Vorteile des Verfahrens und/oder GNNs darstellen. Weiterhin kann das trainierte GNN in ein Echtzeit-Überwachungssystem integriert werden, das kontinuierlich Schwachstellen im Stromnetz identifiziert und die Vorhersageergebnisse dem Netzbetreiber beispielsweise über eine grafische Benutzeroberfläche (GUI) visualisiert. Die Verwendung eines derartigen künstlichen neuronalen Netzes, insbesondere GNN, kann zahlreiche Vorteile (gegenüber herkömmlichen Ansätzen) bieten. Durch den Einsatz eines GNN, das auf graph-konvolutionalen Operationen basiert, kann der Rechenaufwand erheblich reduziert werden, da insbesondere zeitintensive numerische Simulationen weitestgehend ersetzt werden. Darüber hinaus ermöglicht das Verfahren vorteilhafterweise eine hohe Skalierbarkeit, da es problemlos an Netzstrukturen unterschiedlicher Größen angepasst werden kann - insbesondere durch die Möglichkeit des Transferlernens, welches eine Übertragung von Modellen zwischen kleinen und großen Netzen erlaubt. Die präzise Erfassung der topologischen und physikalischen Eigenschaften der Stromnetze führt vorteilhafterweise zu einer verbesserten Vorhersagegenauigkeit. Zudem kann das System flexibel und/oder anpassungsfähig sein, da es (kontinuierlich) aktualisiert werden kann (siehe unten), um neue Daten und veränderte Netzstrukturen zu berücksichtigen. Demnach kann insbesondere eine signifikante Verbesserung im Bereich der dynamischen Netzwerkanalyse bereitgestellt werden, die vor allem im Kontext moderner Energieversorgung und der Integration erneuerbarer Energien vorteilhaft sein kann.

Vorteilhafterweise kann das künstliche neuronale Netz offline der Netzstation trainiert werden. Auf diese Weise kann der Rechen- und/oder Speicheraufwand auf der Seite der Netzstation reduziert werden. So kann beispielsweise das Trainieren und/oder Trainingsverfahren auf einem (zentralen) Rechensystem, etwa einem Großrechner, durchgeführt werden. Dabei können eine Vielzahl an (rechen- und/oder speicherintensiven) Simulationsmodellen und/oder (Konstellationen) von Betriebsparametern und/oder Steuerparametern verwendet werden.

Des Weiteren kann es von Vorteil sein, dass das künstliche neuronale Netz durch ein selbstlernendes künstliches neuronales Netz bereitgestellt wird, und/oder dass das künstliche neuronale Netz mithilfe eines Verfahrens zum bestärkenden und/oder selbstständigen Lernen trainiert wird.

Weiterhin kann vorgesehen werden, dass im Betrieb der Netzstation Betriebsdaten, insbesondere umfassend (betriebsspezifische) Betriebsparameter und/oder (korrespondierende) Steuerbefehle, gesammelt werden, die den synthetischen Trainingsdaten (bspw. für ein nachfolgendes Update bzw. Nachtrainieren) hinzugefügt werden können. Auf diese Weise können reale Betriebsdaten gesammelt werden, um die Entscheidungen des künstlichen neuronalen Netzes zu überprüfen, um insbesondere auf veränderliche Umstände im Netz reagieren zu können.

Des Weiteren kann vorgesehen werden, dass das künstliche neuronale Netz regelmäßig, bspw. bei Änderungen im Netzabschnitt, periodisch, bspw. wöchentlich, monatlich und/oder halbjährlich, (nach-)trainiert wird, um insbesondere ein Update zu erhalten. Dies kann beispielsweise basierend auf den Betriebsdaten erfolgen. Beispielsweise kann eine (zentrale) Recheneinheit das Trainingsverfahren erneut und/oder basierend auf den zusätzlichen Betriebsdaten durchführen. Somit können beispielsweise die Gewichtungsfaktoren (der Neuronen) des künstlichen neuronalen Netzes nachjustiert werden. Die Stellparameter und/oder Gewichtungsfaktoren dieses Updates können in der Folge an die Recheneinheit des Netzübergabemoduls übertragen werden, wodurch das trainierte Update bzw. (nachjustierte) trainierte künstliche neuronale Netz dem Betrieb zugeführt wird. Auf diese Weise kann sichergestellt werden, dass das künstliche neuronale Netz stets an/auf reale Umstände im (elektrischen) Netz vorbereitet ist.

Die Aufgabe wird ferner gelöst durch: ein Netzübergabemodul für eine Netzstation, insbesondere in Form einer Ortsnetzstation oder eines Umspannwerks, vorzugsweise für ein Niederspannungsnetz und/oder ein Mittelspannungsnetz, wobei die Netzstation verschiedene Netzknoten, umfassend unterschiedliche Verbraucher und/oder unterschiedliche Energieerzeuger, in einem Netzabschnitt verbindet, wobei das Netzübergabemodul folgende Komponenten aufweist:

- eine Kommunikationseinheit zum Erhalten von Betriebsparametern von den verschiedenen Netzknoten,

- eine Speichereinheit, in welcher ein, insbesondere offline, vorzugsweise mithilfe eines Verfahrens zum bestärkenden Lernen, trainiertes künstliches neuronales Netz hinterlegt ist,

- eine Recheneinheit, welche dazu ausgeführt ist, die Betriebsparameter mithilfe des künstlichen neuronalen Netzes zu verarbeiten, um Steuerbefehle, insbesondere umfassend bspw. (optimale) Steuerparameter und/oder Stellgrößen, für die verschiedenen Netzknoten bereitzustellen,

wobei das künstliche neuronale Netz mithilfe eines Trainingsverfahrens trainiert wurde, welches vorzugsweise wie oben beschrieben ablaufen kann.

Vorteilhafterweise wurde das künstliche neuronale Netz mithilfe von synthetischen Trainingsdaten trainiert, die dazu dienen, mögliche Netzzustände im Betrieb des Netzabschnittes abzubilden und (optimale) Steuerbefehle in dem Netzabschnitt zu bestimmen, wobei nur ausgewählte Teile der synthetischen Trainingsdaten zum Training des künstlichen neuronalen Netzes verwendet wurden, um die (optimalen) Steuerbefehle insbesondere trotz unvollständiger Zustandsdaten, vorzugsweise ohne eine Zustandsschätzung im Netzabschnitt, zu berechnen und somit kritische Netzzustände, umfassend Strom- und/oder Spannungsabweichungen, insbesondere Überstrom, Überspannung und/oder Unterspannung, zu vermeiden.

Mithilfe des Netzübergabemoduls können die gleichen Vorteile erreicht werden, die oben im Zusammenhang mit dem Trainingsverfahren beschrieben wurden (und/oder umgekehrt). Auf diese Vorteile wird vorliegend vollumfänglich Bezug genommen.

Um eine einfache Montage und eine flexible Einsatzfähigkeit des Netzübergabemoduls zu ermöglichen, kann das Netzübergabemodul als ein einzeln handhabbares Modul ausgebildet sein, welches dazu ausgebildet sein kann, bspw. mithilfe von speziellen form- und/oder kraftschlüssigen Befestigungsmitteln und bestimmter elektrischer Anschlüsse an einer Netzstation befestigt zu werden und eine Steuereinheit für die Netzstation bereitzustellen.

Die Aufgabe wird weiterhin gelöst durch: eine Netzstation, insbesondere in Form einer Ortsnetzstation oder eines Umspannwerks, vorzugsweise für ein Niederspannungsnetz und/oder ein Mittelspannungsnetz, aufweisend ein Netzübergabemodul, welches wie oben beschrieben ausgebildet sein kann.

Mithilfe der Netzstation können die gleichen Vorteile erreicht werden, die oben im Zusammenhang mit dem Trainingsverfahren und/oder mit dem Netzübergabemodul beschrieben wurden. Auf diese Vorteile wird vorliegend vollumfänglich Bezug genommen.

Die Aufgabe wird weiterhin gelöst durch: ein Betriebsverfahren zum Betreiben einer Netzstation, insbesondere in Form einer Ortsnetzstation oder eines Umspannwerks, vorzugsweise für ein Niederspannungsnetz und/oder ein Mittelspannungsnetz, wobei die Netzstation über elektrische Leitungen verschiedene Netzknoten, vorzugsweise unterschiedliche Verbraucher und/oder unterschiedliche Energieerzeuger, verbindet, wobei zum Betreiben der Netzstation ein Netzübergabemodul verwendet wird, welches wie oben beschrieben ausgebildet sein kann, um optimale Steuerbefehle für die verschiedenen Netzknoten mithilfe eines trainierten künstlichen neuronalen Netzes bereitzustellen.

Mithilfe des Betriebsverfahrens können die gleichen Vorteile erreicht werden, die oben im Zusammenhang mit dem Trainingsverfahren und/oder mit dem Netzübergabemodul beschrieben wurden (und/oder umgekehrt). Auf diese Vorteile wird vorliegend vollumfänglich Bezug genommen.

Vorteilhafterweise können im Betrieb der Netzstation Betriebsdaten gesammelt werden, die den synthetischen Trainingsdaten hinzugefügt werden können. Auf diese Weise kann die Möglichkeit geschaffen werden, die Entscheidungen des künstlichen neuronalen Netzes zu überprüfen.

Vorzugsweise kann das künstliche neuronale Netz regelmäßig, bspw. bei Änderungen im Netzabschnitt, periodisch, bspw. wöchentlich, monatlich und/oder halbjährlich, neu trainiert werden. Dafür kann das neuronale Netz periodisch neue Stellparameter erhalten, die sich aus einer neuen Inferenz des Trainingsprozesses ergeben. So kann beispielsweise eine bestimmte Jahreszeit explizit berücksichtigt werden. Mit anderen Worten kann das künstliche neuronale Netz, beispielsweise als (zusätzlichen) Input, einen Zeitstempel zugeführt bekommen, welcher für die Betriebsparameter und/oder für einen bestimmten (diskreten) Zeitschritt/punkt spezifisch ist. Dadurch kann das künstliche neuronale Netz eine verbesserte Vorhersage bereitstellen. Es ist alternativ oder zusätzlich auch denkbar, dass unterschiedliche künstliche neuronale Netze und/oder das künstliche neuronale Netz unterschiedliche (untergeordnete) künstliche neuronale Netze bereitgestellt bzw. trainiert werden, welche vorzugsweise spezifisch für Jahreszeiten und/oder Tageszeiten trainiert wurden (basierend z. B. auf entsprechenden spezifischen Trainingsdaten, insbesondere Betriebsparametern).

Die Erfindung und deren Weiterbildungen sowie deren Vorteile werden nachfolgend anhand von Zeichnungen beispielhaft näher erläutert. Es zeigen schematisch:

Fig. 1    eine beispielhafte Darstellung eines bekannten Verfahrens,

Fig. 2    eine beispielhafte Problematik bei dem bekannten Verfahren, und

Fig. 3    eine schematische Darstellung einer Erfindungsidee.

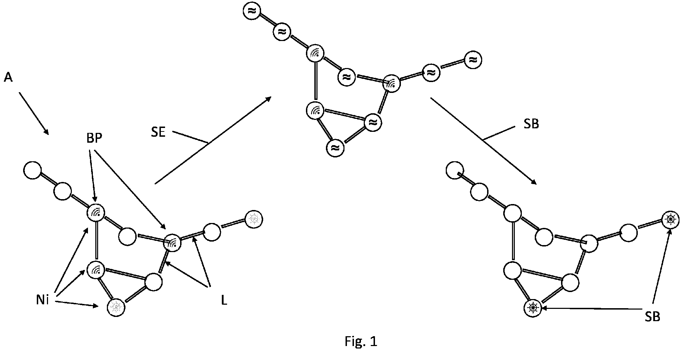

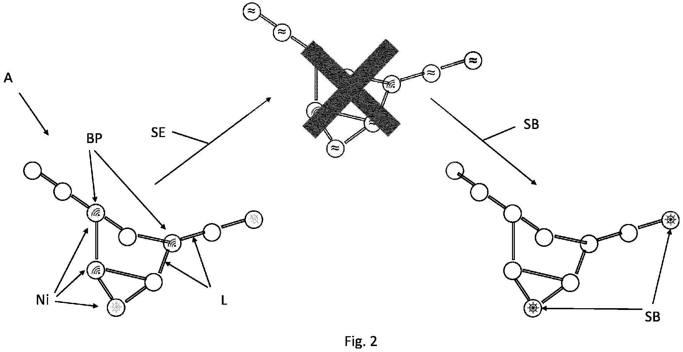

Die Fig. 1 und 2 dienen zum Erklären einer der Erfindung zugrunde liegenden Problematik. Die Fig. 1 und 2 deuten an, dass zur Steuerung von Netzabschnitten A Zustandsdaten in Form von Betriebsparametern BP benötigt werden. Die Betriebsparameter BP können insbesondere in Niederspannungsnetzen und/oder in Mittelspannungsnetzen nicht an allen Netzknoten Ni und/oder nicht an allen Leitungen L vermessen werden (z. B. mangels Sensoren und/oder aufgrund von Ausfällen). Da die Betriebsparameter BP nicht vollständig vermessen werden können, sehen bekannte Verfahren eine Zustandsschätzung SE (eng. "state estimation") vor, um die vorhandenen Zustandsdaten im Netzabschnitt A zu vervollständigen. In Kenntnis von vervollständigten, zum Teil geschätzten, Zustandsdaten können optimale Lastflussparameter mithilfe einer Lastflussparameterberechnung OPF (eng. "optimal power flow") berechnet werden, um anschließend Steuerungsbefehle SB für die einzelnen Netzknoten Ni zu ermitteln.

Die Erfindung erkennt, dass die Zustandsschätzung SE und anschließende Lastflussparameterberechnung OPF einen hohen Rechenaufwand nach sich ziehen. Zudem benötigt eine Zustandsschätzung SE eine minimale Anzahl an Messungen, um eine zuverlässige Schätzgüte zu generieren. Gibt es jedoch nicht hinreichend Messungen im Netz, muss noch ein drittes Verfahren, üblicherweise eine sog. Pseudo-Wertberechnung (oder kurz PW) zur synthetischen Messwertschätzung implementiert werden, die die Güte bzw. Genauigkeit der Steuerbefehle weiter senkt.

Die Erfindung erkennt ferner insbesondere, dass die Verfahren (Pseudo-Wertberechnung PW, Zustandsschätzung SE und/oder Lastflussparameterberechnung OPF) Schätzfehler aufweisen und oft eine nicht hinreichende Qualität der Zustandsschätzung bereitstellen können.

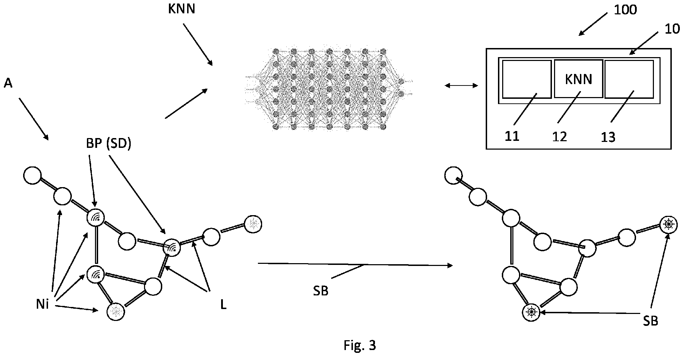

Wie es die Fig. 3 verdeutlicht, wird ein Trainingsverfahren zum Trainieren eines künstlichen neuronalen Netzes KNN für ein Netzübergabemodul 10 zum Einsatz in einer Netzstation 100, insbesondere in Form einer Ortsnetzstation oder eines Umspannwerks, vorzugsweise für ein Niederspannungsnetz und/oder ein Mittelspannungsnetz, sowie ein zugehöriges Netzübergabemodul 10 vorgeschlagen.

Wie es die Fig. 3 andeutet, kann die Netzstation 100 verschiedene Netzknoten Ni, umfassend unterschiedliche Verbraucher und/oder unterschiedliche Energieerzeuger, in einem Netzabschnitt A verbinden.

Der Netzabschnitt A kann ebenfalls als ein Stromnetzabschnitt bezeichnet werden.

Wie es die Fig. 3 oben rechts andeutet, kann das Netzübergabemodul 10 eine Kommunikationseinheit 11 zum Erhalten von Betriebsparametern BP von den verschiedenen Netzknoten Ni, eine Speichereinheit 12, in welcher ein, insbesondere offline, vorzugsweise mithilfe eines Verfahrens zum bestärkenden Lernen, trainiertes künstliches neuronales Netz KNN hinterlegt ist, und eine Recheneinheit 13 aufweisen, welche dazu ausgeführt ist, die Betriebsparameter BP mithilfe des künstlichen neuronalen Netzes KNN zu verarbeiten und um Steuerbefehle, insbesondere umfassend bspw. optimale Steuerparameter und/oder Stellgrößen, für die verschiedenen Netzknoten Ni bereitzustellen.

Die Betriebsparameter BP können eine Leistung, insbesondere eine Wirkleistung und/oder eine Blindleistung, einen Strom, eine Spannung und/oder einen Phasenwinkel an elektrischen Leitungen L aufweisen, die die verschiedenen Netzknoten Ni verbinden.

Die Steuerparameter können eine Leistung, insbesondere eine Wirkleistung und/oder eine Blindleistung, einen Strom, eine Spannung und/oder einen Phasenwinkel an korrespondierenden Leitungen L aufweisen.

Die Stellgrößen können Schalterstellungen und/oder Leistungsstufen aufweisen.

Gemäß dem Verfahren wird das künstliche neuronale Netz KNN mithilfe von synthetischen Trainingsdaten SD trainiert, die dazu dienen, mögliche Netzzustände im Betrieb des Netzabschnittes A abzubilden und (optimale) Steuerbefehle SB in dem Netzabschnitt A zu bestimmen, wobei nur ausgewählte Teile der synthetischen Trainingsdaten SD zum Training des künstlichen neuronalen Netzes KNN verwendet werden, um die (optimalen) Steuerbefehle SB, insbesondere trotz unvollständiger Zustandsdaten, vorzugsweise ohne eine Zustandsschätzung SE im Netzabschnitt A, nachzubilden und somit kritische Netzzustände, umfassend Strom- und/oder Spannungsabweichungen, insbesondere Überstrom, Überspannung und/oder Unterspannung, zu vermeiden.

Wie es die Fig. 3 verdeutlicht, kann das Verfahren zur automatischen Generierung und Übertragung von Steuerbefehlen SB für steuerbare Netzknoten Ni im Netzabschnitt A dienen.

Das Training kann vorteilhafterweise auf Basis einer eingeschränkten (und geringen) Anzahl von verfügbaren Messwerten dargestellt, bspw. von ungefähr 1% bis 20% oder nur 10% an benötigten Zustandsdaten bzw. Betriebsparametern BP.

Das Verfahren kann dazu genutzt werden, um einen bestimmten Betriebsplan innerhalb des Netzabschnittes einzuhalten.

Das Verfahren kann dazu genutzt werden, um einen autonomen Netzbetrieb des Netzabschnittes zu ermöglichen, um bspw. an den Übergabestellen einen Stromfluss von 0 zu erreichen.

Vorzugsweise kann das Verfahren dazu dienen, die Steuerung des Netzabschnitts A derart zu gestalten, dass es zu keinen Engpässen, keinen Strom- und/oder Spannungsabweichungen, insbesondere zu keinem Überstrom, zu keiner Überspannung und/oder zu keiner Unterspannung im Netzabschnitt A kommt. Insbesondere können mithilfe des Verfahrens Engpässe dynamisch identifiziert und behoben werden, sodass ein zuverlässiger Netzbetrieb gewährleistet werden kann. Vorteilhafterweise kann das Verfahren ermöglichen, dass eine Koordination von Steuerbefehlen für einen engpassfreien Betrieb individueller Netzabschnitte bzw. Stromnetze durchgeführt werden kann.

Das vorgeschlagene Netzübergabemodul 10 kann an verschiedenen Orten eines Stromnetzes implementiert werden, z. B. in Ortsnetzstationen bzw. Kabelverteilerschränken (für die Steuerung von Niederspannungsnetzen) oder Umspannwerken (für die Steuerung von Mittelspannungsnetzen).

Somit kann ein adaptives Erlernen verschiedener Netzgebiete sowie eine Anpassung an sich ändernde Versorgungsaufgaben ermöglicht werden.

Zudem kann eine verbesserte Koordination von Steuerbefehlen SB trotz unvollständiger Zustandsinformation bzw. Betriebsparametern BP ermöglicht werden.

Das Verfahren berücksichtigt, dass in Nieder- und Mittelspannungsnetzen keine vollständige und/oder ausreichende messtechnische Erfassung aller Zustandsdaten bzw. Betriebsparametern BP erfolgen kann, umfassend z. B. Leistung, Strom, Spannung an jeder technischen Einheit und/oder Leitung im Netz.

Dieses Verfahren kann im aktiven Echtzeit-Netzbetrieb verwendet werden, um optimale Steuerbefehle SB an die Netzknoten Ni bereitzustellen. Die Steuerbefehle SB werden trotz unvollständiger Messinformationen in dem Netzabschnitt A durch das speziell dazu trainierte künstliche neuronale Netz KNN bestimmt und mittels der Recheneinheit 13 und Kommunikationseinheit 11 an die Netzknoten Ni übermittelt.

Das Netzübergabemodul 10 kann als "Grid Cube" bezeichnet werden und ohne besondere Anforderungen an Rechenleistung bzw. Speichervermögen umgesetzt werden, da nur das trainierte künstliche neuronale Netz KNN dort gespeichert und ausgewertet werden muss. Das Netzübergabemodul 10 kann standardmäßig ausgeführt und in verschiedenen Netzstationen 100 verbaut werden, um dort die gewünschte Steuerung und/oder Regelung zu implementieren.

Im Training kann das künstliche neuronale Netz KNN eine Inferenz durchführen, um aus reduzierten Eingangsdaten (Betriebsparametern BP) optimale Regelbefehle bzw. Steuerbefehle SB (Steuerparameter und/oder Stellgrößen) zu generieren.

Vorteilhafterweise kann die Auswertung des vortrainierten (künstlichen) neuronalen Netzes um Größenordnungen schneller ausgeführt sein als Optimierungsverfahren, die für die Verfahren (Pseudo-Wertberechnung PW, Zustandsschätzung SE und/oder Lastflussparameterberechnung OPF) benötigt werden.

Mittels der Auswertung im künstlichen neuronalen Netz KNN können anschließend Steuerbefehle SB für die Netzknoten Ni abgeleitet und an die Kommunikationseinheit 11 übergeben werden, bevor die nächsten Messdaten aus dem Netzabschnitt A wieder dem trainierten künstlichen neuronalen Netz KNN zur Auswertung übergeben werden.

Für eine geregelte Abfolge der Messdatenerfassung und Steuerbefehlsübermittlung kann beim Training eine Parametrierung der zu berücksichtigenden Latenzen durchgeführt werden. Die Parametrierung kann bspw. so erfolgen, dass es ermöglicht wird, den Regelkreis durch inkrementelle Steuerbefehle einzuschwingen.

Eine solche "vorsichtige" und "vorausschauende" Steuerung bzw. Regelung kann vom Netzübergabemodul 10 im Training explizit erlernt werden, wobei vorzugsweise die Optimierungsergebnisse erst in eine geeignete Regelung überführt werden.

Das Training bzw. der Lernprozess kann unter Zuhilfenahme einer realen Umgebung erfolgen, in der der zu steuernde Netzabschnitt A simuliert wird.

Das Training kann nur einen ausgewählten Teil der zur Verfügung stehenden synthetischen Trainingsdaten SD dem künstlichen neuronalen Netz KNN zum Lernen anbieten, um das künstliche neuronale Netz KNN an die im Netzabschnitt A real beobachtbaren (reduzierten) Messwerte vorzubereiten.

Durch ein solches Training kann das Verfahren implizit Engpässe, wie bspw. Spannungsbandverletzungen und Betriebsmittelüberlastungen, erkennen und durch geeignete Steuerbefehle SB lösen.

Im Anschluss an das Training kann ein trainiertes künstliches neuronales Netz KNN bereitgestellt werden, welches für die Echtzeitanwendung und/oder im echten Netzbetrieb eingesetzt werden kann.

Das künstliche neuronale Netz KNN kann vorteilhafterweise mithilfe eines nicht-überwachten Verfahrens trainiert werden (eng. "reinforcement learning", auf Deutsch bestärkendes Lernen oder verstärkendes Lernen). Ein Vorteil des nicht-überwachten Lernens liegt darin, eine selbstständige Erkennung ungültiger Zustände zu ermöglichen, was im Falle einer dezentralen Steuerung bzw. Regelung und Echtzeitanwendung einen erheblichen Vorteil gegenüber überwachten Lernmethoden darstellen kann.

Vorteilhafterweise kann das künstliche neuronale Netz KNN offline der Netzstation 100 trainiert werden, um den Rechen- und/oder Speicheraufwand auf der Seite der Netzstation 100 zu reduzieren.

Vorteilhafterweise können für das Training synthetische Trainingsdaten SD verwendet werden, bei welchen seltene kritische Netzzustände explizit synthetisch bzw. simulativ erstellt und berücksichtigt werden können.

Zum anderen können bei der Auswahl an synthetischen Trainingsdaten SD, die zum Training verwendet werden, individuelle Eigenschaften eines realen Netzabschnittes A, wie z. B. eine Art und eine Anzahl an Messpunkten, vorhandene Topologien (Photovoltaik, Windenergie, E-Mobility, usw.), Spannungsebene, Betriebsmittel, usw. berücksichtigt werden, um eine hohe Güte der Modellentscheidung zu erreichen.

Wie es die Fig. 3 andeutet, ist es denkbar, dass das künstliche neuronale Netz KNN mithilfe von synthetischen Trainingsdaten SD trainiert wird, die topologische Zustandsdaten im Betrieb des Netzabschnittes A abbilden.

Die synthetischen Trainingsdaten SD können grundsätzlich unterschiedliche Netzzustände im Betrieb des Netzabschnittes A abbilden.

Die Trainingsdaten SD können somit vorzugsweise mit ungewöhnlichen Daten ergänzt werden, die am Rande des Netzabschnittes A auftreten können und die zu kritischen Netzzuständen führen können, umfassend Strom- und/oder Spannungsabweichungen, insbesondere Überstrom, Überspannung und/oder Unterspannung.

Vorteilhafterweise kann das künstliche neuronale Netz KNN nicht nur auf Normalbetrieb trainiert werden, sondern auch auf Fälle, die zwar selten vorkommen, aber im Hinblick auf die Betriebssicherheit kritisch sind.

Zum einen ist es denkbar, dass die synthetischen Trainingsdaten SD mithilfe von Standardlastprofilen und/oder historischen Reallastprofilen des Netzabschnittes A erstellt werden, die mithilfe von Zeitreihen und/oder stochastischen Verfahren vervielfacht werden, um insbesondere zeitlich korrelierte und/oder unkorrelierte Zustandsdaten zu erstellen. Zum anderen ist es denkbar, dass die synthetischen Trainingsdaten SD mithilfe eines einstellbaren Parameterdatensatzes erstellt werden, der bestimmte Umgebungsparameter, Wetter, Jahreszeit, Uhrzeit, usw. berücksichtigen kann, und/oder der bestimmte Topologien im Netzabschnitt A berücksichtigen kann, insbesondere umfassend Photovoltaik, Windenergie, E-Mobility, usw.

Der bestimmte Teil der synthetischen Trainingsdaten SD wird derart ausgewählt, um das künstliche neuronale Netz KNN zu trainieren, mit unvollständigen Zustandsdaten umgehen zu können und dennoch bestimmte (optimale) Steuerbefehle SB zu erreichen, vorzugsweise ohne eine Zustandsschätzung SE im Netzabschnitt A vorzunehmen (wie es die Fig. 2 andeutet).

Insbesondere kann nur ein Teil in Höhe von 1% bis 20%, bspw. nur 10%, der synthetischen Trainingsdaten SD verwendet werden, um das künstliche neuronale Netz KNN zu trainieren, mit unvollständigen Daten umgehen zu können und dennoch (optimale) Steuerbefehle SB zu erreichen, auch ohne eine Pseudo-Wertberechnung verwenden zu müssen.

Vorzugsweise können den synthetischen Trainingsdaten SD seltene kritische Netzzustände gezielt aufgeprägt werden, um kritische Netzzustände zu simulieren, umfassend Strom- und/oder Spannungsabweichungen, insbesondere Überstrom, Überspannung und/oder Unterspannung, umzugehen.

Wie oben bereits erwähnt, können bei der Auswahl der synthetischen Trainingsdaten SD, die dem künstlichen neuronalen Netz KNN zum Training angeboten werden, vorhandene Messpunkte, Topologien (welche Arten an Verbrauchern und/oder Energieerzeugern vorhanden sind), Spannungsebenen (die typischerweise an bestimmten Netzknoten Ni auftreten könne) und/oder Betriebsmittel (Solaranlagen, Windkraftanlagen, Ladestationen für E-Mobilität usw.) im Netzabschnitt A berücksichtigt werden. Außerdem ist es denkbar, dass bei der Auswahl der synthetischen Trainingsdaten SD, die dem künstlichen neuronalen Netz KNN zum Training angeboten werden, die Zustandsdaten ausgewählt werden, die bestimmte Unterabschnitte des Netzabschnittes A betreffen, wo sich bspw. typischerweise Messpunkte für Betriebsparameter BP befinden können.

Wie oben bereits erwähnt, kann beim Trainieren des künstlichen neuronalen Netzes KNN eine Parametrierung von Latenzen durchgeführt werden, um eine geregelte Abfolge der Messdatenerfassung und Steuerbefehlsübermittlung zu ermöglichen. Zudem können beim Trainieren des künstlichen neuronalen Netzes KNN dem künstlichen neuronalen Netz KNN mehrmals die gleichen ausgewählten Teile der synthetischen Trainingsdaten SD angeboten werden, die nur um den Effekt der vorangegangenen Regelung ergänzt wird. Dadurch wird eine zurückhaltende, rückgekoppelte und/oder feedbackbasierte Steuerbefehlserzeugung ermöglicht, und vorzugsweise eine schrittweise und/oder kontrollierte Annäherung an die bestimmten (optimalen) Steuerbefehle SB ermöglicht. Somit kann ein verbesserter Regelkreis durch das Training ermöglicht werden, der eine inkrementelle Steuerung bzw. Regelung im realen Betrieb des Netzabschnittes A ermöglicht.

Beim Trainieren des künstlichen neuronalen Netzes KNN kann eine Zielfunktion ZF verwendet (inbesondere minimiert) werden, die Nutzen und Kosten berücksichtigen kann. Dabei kann die Zielfunktion ZF definiert sein als:

$$ZF = Nutzen - Kosten,$$

Die Nutzen können bspw. ein Vermeiden von kritischen Netzzuständen, umfassend Strom- und/oder Spannungsabweichungen, insbesondere Überstrom, Überspannung und/oder Unterspannung, beinhalten. Nutzen und/oder Kosten können dabei beispielsweise (normierte) Skalarwerte aufweisen, welche insbesondere anhand von den (im Training, siehe oben) verwendeten Simulationsmodellen ermittelt werden können, wobei z. B. für die jeweiligen simulierten Zustände entsprechende Nutzen und Kosten berechnet werden und miteinander, z. B. anhand einer (z. B. durch einen Menschen) vordefinierten Lookup-Tabelle, verglichen werden. Dies kann beispielsweise zur Optimierung (z. B. zwischen zwei aufeinanderfolgenden Epochen) des Trainings berechnet werden. Die Gewichtungsfaktoren können dabei derart nachjustiert werden, dass die Zielfunktion optimiert, insbesondere maximiert, wird.

Die Kosten können vorteilhafterweise von einer Blindleistung und einer Wirkleistung im Betrieb des Netzabschnittes A abhängen, um nicht nur die erforderliche Leistung für die Netzknoten Ni zu optimieren, sondern auch eine Leistung, die tatsächlich bereitgestellt, aber möglicherweise nicht genutzt wird.

Bei den Kosten können Blindleistung und Wirkleistung mit Gewichten berücksichtigt werden:

$$Kosten = \alpha * Blindleistung + \beta * Wirkleistung,$$

wobei bspw. $\alpha \ll \beta$ sein kann. Demnach kann beispielsweise die Wirkleistung um einen Faktor 10 stärker gewichtet sein. Dadurch kann vorteilhafterweise die Bereitstellung einer (bestimmten) Wirkleistung (höher) priorisiert werden, was insbesondere in Abhängigkeit von einem (etwa für das Training vorgegebenen) Betriebsplan erfolgen kann.

Die Zielfunktion ZF kann bspw. als eine Bewertungsfunktion (bspw. für einen Echtbetrieb) und/oder eine Optimierungsfunktion (bspw. für ein selbstüberwachtes, bestärkendes Lernen und/oder verstärkendes Lernen) verwendet werden.

Vorteilhafterweise kann das künstliche neuronale Netz KNN offline der Netzstation 100 trainiert werden, um den Rechen- und/oder Speicheraufwand auf der Seite der Netzstation 100 zu reduzieren.

Vorteilhafterweise können im Betrieb der Netzstation 100 Betriebsdaten gesammelt werden, die den synthetischen Trainingsdaten SD (bspw. für ein nachfolgendes Update bzw. Nachtrainieren) hinzugefügt werden können.

Des Weiteren kann das künstliche neuronale Netz KNN regelmäßig, bspw. bei Änderungen im Netzabschnitt A, periodisch, bspw. wöchentlich, monatlich und/oder halbjährlich, trainiert werden, um ein Update zu erhalten. Die Stellparameter dieses Updates können in der Folge an die Recheneinheit des Netzübergabemoduls (bzw. des "Grid Cubes") übertragen werden, wodurch das trainierte Update dem Betrieb zugeführt wird. Auf diese Weise kann sichergestellt werden, dass das künstliche neuronale Netz stets an reale Umstände im Netz vorbereitet ist.

Ein korrespondierendes Netzübergabemodul 10 für eine Netzstation 100, insbesondere in Form einer Ortsnetzstation oder eines Umspannwerks, vorzugsweise für ein Niederspannungsnetz und/oder ein Mittelspannungsnetz, stellt ebenfalls einen Aspekt der Erfindung dar, wobei das Netzübergabemodul 10 folgende Komponenten aufweist:

- eine Kommunikationseinheit 11 zum Erhalten von Betriebsparametern BP von den verschiedenen Netzknoten Ni,

- eine Speichereinheit 12, in welcher ein, insbesondere offline, vorzugsweise mithilfe eines Verfahrens zum bestärkenden Lernen, trainiertes künstliches neuronales Netz KNN hinterlegt ist,

- eine Recheneinheit 13, welche dazu ausgeführt ist, die Betriebsparameter BP mithilfe des künstlichen neuronalen Netzes KNN zu verarbeiten, um Steuerbefehle SB, insbesondere umfassend bspw. optimale Steuerparameter und/oder Stellgrößen, für die verschiedenen Netzknoten Ni bereitzustellen,

wobei das künstliche neuronale Netz KNN mithilfe eines Trainingsverfahrens trainiert wurde, welches wie oben beschrieben ablaufen kann.

Vorteilhafterweise wurde das künstliche neuronale Netz KNN mithilfe von synthetischen Trainingsdaten SD trainiert, die dazu dienen, mögliche Netzzustände im Betrieb des Netzabschnittes A abzubilden und (optimale) Steuerbefehle SB in dem Netzabschnitt A zu bestimmen, wobei nur ausgewählte Teile der synthetischen Trainingsdaten SD zum Training des künstlichen neuronalen Netzes KNN verwendet wurden, um die (optimalen) Steuerbefehle SB, insbesondere trotz unvollständiger Zustandsdaten, vorzugsweise ohne eine Zustandsschätzung SE im Netzabschnitt A, nachzubilden und somit kritische Netzzustände, umfassend Strom- und/oder Spannungsabweichungen, insbesondere Überstrom, Überspannung und/oder Unterspannung, zu vermeiden.

Mithilfe des Netzübergabemoduls 10 können die gleichen Vorteile erreicht werden, die oben im Zusammenhang mit dem Trainingsverfahren beschrieben wurden. Auf diese Vorteile wird vorliegend vollumfänglich Bezug genommen.

Um eine einfache Montage und eine flexible Einsatzfähigkeit des Netzübergabemodul 10 zu ermöglichen, kann das Netzübergabemodul 10 als ein einzeln handhabbares Modul ausgebildet sein, welches dazu ausgebildet sein kann, bspw. mithilfe von speziellen form- und/oder kraftschlüssigen Befestigungsmitteln und bestimmter elektrischer Anschlüsse an einer Netzstation 100 befestigt zu werden und eine Steuereinheit für die Netzstation 100 bereitzustellen.

Eine korrespondierende Netzstation 100, insbesondere in Form einer Ortsnetzstation oder eines Umspannwerks, vorzugsweise für ein Niederspannungsnetz und/oder ein Mittelspannungsnetz, aufweisend ein entsprechendes Netzübergabemodul 10, welches wie oben beschrieben ausgebildet sein kann, stellt ebenfalls einen Aspekt der Erfindung dar.

Ein korrespondierendes Betriebsverfahren zum Betreiben einer Netzstation 100, insbesondere in Form einer Ortsnetzstation oder eines Umspannwerks, vorzugsweise für ein Niederspannungsnetz und/oder ein Mittelspannungsnetz, wobei die Netzstation 100 über elektrische Leitungen L verschiedene Netzknoten Ni, vorzugsweise unterschiedliche Verbraucher und/oder unterschiedliche Energieerzeuger, verbindet, wobei zum Betreiben der Netzstation 100 ein Netzübergabemodul 10 verwendet wird, welches wie oben beschrieben ausgebildet sein kann, um optimale Steuerbefehle SB für die verschiedenen Netzknoten Ni mithilfe eines trainierten künstlichen neuronalen Netzes KNN bereitzustellen, stellt ebenfalls einen Aspekt der Erfindung dar.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

**Bezugszeichenliste**

| | |
|---|---|
| 10 | Netzübergabemodul |
| 11 | Kommunikationseinheit |
| 12 | Speichereinheit |
| 13 | Recheneinheit |
| | |
| 100 | Netzstation |
| | |
| A | Netzabschnitt |
| Ni | Netzknoten |
| L | Leitungen |

BP    Betriebsparameter

SB    Steuerbefehle

SD    synthetische Trainingsdaten

KNN    künstliches neuronales Netz

OPF    Lastflussberechnung

SE    Zustandsschätzung

**Patentansprüche**

1. Trainingsverfahren zum Trainieren eines künstlichen neuronalen Netzes (KNN) für ein Netzübergabemodul (10) zum Einsatz in einer Netzstation (100), insbesondere in Form einer Ortsnetzstation oder eines Umspannwerks, vorzugsweise für ein Niederspannungsnetz und/oder ein Mittelspannungsnetz,

    wobei die Netzstation (100) verschiedene Netzknoten (Ni), umfassend unterschiedliche Verbraucher und/oder unterschiedliche Energieerzeuger, in einem Netzabschnitt (A) verbindet,
    wobei das Netzübergabemodul (10) eine Kommunikationseinheit (11) zum Erhalten von Betriebsparametern (BP) von den verschiedenen Netzknoten (Ni), eine Speichereinheit (12), in welcher ein, insbesondere offline, vorzugsweise mithilfe eines Verfahrens zum bestärkenden Lernen, trainiertes künstliches neuronales Netz (KNN) hinterlegt ist, und eine Recheneinheit (13) aufweist, welche dazu ausgeführt ist, die Betriebsparameter (BP) mithilfe des künstlichen neuronalen Netzes (KNN) zu verarbeiten und Steuerbefehle (SB) für die verschiedenen Netzknoten (Ni) bereitzustellen,
    wobei das künstliche neuronale Netz (KNN) mithilfe von synthetischen Trainingsdaten (SD) trainiert wird, die dazu dienen, mögliche Netzzustände im Betrieb des Netzabschnittes (A) abzubilden und Steuerbefehle (SB) in dem Netzabschnitt (A) zu bestimmen,
    wobei nur ausgewählte Teile der synthetischen Trainingsdaten (SD) zum Training des künstlichen neuronalen Netzes (KNN) verwendet werden,
    um die Steuerbefehle (SB), insbesondere trotz unvollständiger Zustandsdaten, vorzugsweise ohne eine Zustandsschätzung (SE) im Netzabschnitt (A), nachzubilden und somit kritische Netzzustände, umfassend Strom- und/oder Spannungsabweichungen, insbesondere Überstrom, Überspannung und/oder Unterspannung, zu vermeiden.

2. Trainingsverfahren nach Anspruch 1,

    wobei das künstliche neuronale Netz (KNN) mithilfe von synthetischen Trainingsdaten (SD) trainiert wird, die topologische Zustandsdaten im Betrieb des Netzabschnittes (A) abbilden,
    und/oder wobei das künstliche neuronale Netz (KNN) mithilfe von synthetischen Trainingsdaten (SD) trainiert wird, die unterschiedliche Netzzustände im Betrieb des Netzabschnittes (A) abbilden,
    und/oder wobei die synthetischen Trainingsdaten (SD) mithilfe von Standardlastprofilen und/oder historischen Reallastprofilen des Netzabschnittes (A) erstellt werden, die mithilfe von Zeitreihen und/oder stochastischen Verfahren vervielfacht werden, um insbesondere zeitlich korrelierte und/oder unkorrelierte Zustandsdaten zu erstellen,
    und/oder wobei die synthetischen Trainingsdaten (SD) mithilfe eines einstellbaren Parameterdatensatzes erstellt werden,
    der bestimmte Umgebungsparameter, Wetter, Jahreszeit, Uhrzeit, usw. berücksichtigt, und/oder der bestimmte Topologien im Netzabschnitt (A) berücksichtigt, insbesondere umfassend Photovoltaik, Windenergie, E-Mobility, usw.

3. Trainingsverfahren nach einem der vorhergehenden Ansprüche,

    wobei nur bestimmte Teile der synthetischen Trainingsdaten (SD) ausgewählt werden, um das künstliche neuronale Netz (KNN) zu trainieren, mit unvollständigen Zustandsdaten umzugehen und dennoch bestimmte Steuerbefehle (SB) zu erreichen, vorzugsweise ohne eine Zustandsschätzung (SE) im Netzabschnitt (A) vorzunehmen,
    und/oder wobei nur ein Teil in Höhe von 1% bis 20%, bspw. nur 10%, der synthetischen Trainingsdaten (SD) verwendet wird, um das künstliche neuronale Netz (KNN) zu trainieren, mit unvollständigen Daten umzugehen und dennoch bestimmte optimale Steuerbefehle (SB) zu erreichen.

4. Trainingsverfahren nach einem der vorhergehenden Ansprüche,
wobei den synthetischen Trainingsdaten (SD) seltene kritische Netzzustände gezielt aufgeprägt werden, um das künstliche neuronale Netz (KNN) zu trainieren, mit kritischen Netzzuständen, umfassend Strom- und/oder Spannungsabweichungen, insbesondere Überstrom, Überspannung und/oder Unterspannung, umzugehen.

5. Trainingsverfahren nach einem der vorhergehenden Ansprüche,

wobei bei der Auswahl der synthetischen Trainingsdaten (SD), die dem künstlichen neuronalen Netz (KNN) zum Training angeboten werden, vorhandene Messpunkte, Topologien, Spannungsebenen und/oder Betriebsmittel im Netzabschnitt (A) berücksichtigt werden,
und/oder wobei bei der Auswahl der synthetischen Trainingsdaten (SD), die dem künstlichen neuronalen Netz (KNN) zum Training angeboten wurden, die Zustandsdaten ausgewählt werden, die bestimmte Unterabschnitte des Netzabschnittes (A) betreffen.

6. Trainingsverfahren nach einem der vorhergehenden Ansprüche,

wobei beim Trainieren des künstlichen neuronalen Netzes (KNN) eine Parametrierung von Latenzen durchgeführt wird, um eine geregelte Abfolge der Messdatenerfassung und Steuerbefehlsübermittlung zu ermöglichen, und/oder wobei beim Trainieren des künstlichen neuronalen Netzes (KNN) dem künstlichen neuronalen Netz (KNN) mehrmals die gleichen ausgewählten Teile der synthetischen Trainingsdaten (SD) angeboten werden, um eine zurückhaltende, rückgekoppelte und/oder feedbackbasierte Steuerbefehlserzeugung zu ermöglichen, und vorzugsweise um eine schrittweise und/oder kontrollierte Annäherung an die bestimmten optimalen Steuerbefehle (SB) zu ermöglichen.

7. Trainingsverfahren nach einem der vorhergehenden Ansprüche,

wobei beim Trainieren des künstlichen neuronalen Netzes (KNN) eine Zielfunktion (ZF) verwendet wird, die Nutzen und Kosten berücksichtigt,
wobei insbesondere die Nutzen ein Vermeiden von kritischen Netzzuständen, umfassend Strom- und/oder Spannungsabweichungen, insbesondere Überstrom, Überspannung und/oder Unterspannung, beinhalten, und/oder
wobei vorzugsweise die Kosten von einer Blindleistung und einer Wirkleistung im Betrieb des Netzabschnittes (A) abhängen,
wobei bevorzugt die Zielfunktion (ZF) als eine Bewertungsfunktion und/oder eine Optimierungsfunktion verwendet wird.

8. Trainingsverfahren nach einem der vorhergehenden Ansprüche,

wobei das künstliche neuronale Netz (KNN) offline der Netzstation (100) trainiert wird,
und/oder wobei das künstliche neuronale Netz (KNN) durch ein selbstlernendes künstliches neuronales Netz bereitgestellt wird,
und/oder wobei das künstliche neuronale Netz (KNN) mithilfe eines Verfahrens zum bestärkenden Lernen trainiert wird.

9. Trainingsverfahren nach einem der vorhergehenden Ansprüche,

wobei im Betrieb der Netzstation (100) Betriebsdaten gesammelt werden, die den synthetischen Trainingsdaten (SD) hinzugefügt werden,
und/oder wobei das künstliche neuronale Netz (KNN) regelmäßig, bspw. bei Änderungen im Netzabschnitt (A), periodisch, bspw. wöchentlich, monatlich und/oder halbjährlich, trainiert wird, um ein Update zu erhalten.

10. Trainingsverfahren nach einem der vorhergehenden Ansprüche,

wobei die Betriebsparameter (BP) eine Leistung, insbesondere eine Wirkleistung und/oder eine Blindleistung, einen Strom, eine Spannung und/oder einen Phasenwinkel an elektrischen Leitungen (L) aufweisen, die die verschiedenen Netzknoten (Ni) verbinden,

und/oder wobei die Steuerbefehle (SB) Steuerparameter, insbesondere eine Leistung, insbesondere eine Wirkleistung und/oder eine Blindleistung, einen Strom, eine Spannung und/oder einen Phasenwinkel, an korrespondierenden Leitungen (L) aufweisen, und/oder wobei die Steuerbefehle (SB) Stellgrößen, insbesondere Schalterstellungen und/oder Leistungsstufen, aufweisen.

11. Netzübergabemodul (10) für eine Netzstation (100), insbesondere in Form einer Ortsnetzstation oder eines Umspannwerks, vorzugsweise für ein Niederspannungsnetz und/oder ein Mittelspannungsnetz,

wobei die Netzstation (100) verschiedene Netzknoten (Ni), umfassend unterschiedliche Verbraucher und/oder unterschiedliche Energieerzeuger, in einem Netzabschnitt (A) verbindet,
das Netzübergabemodul (10) aufweisend:

- eine Kommunikationseinheit (11) zum Erhalten von Betriebsparametern (BP) von den verschiedenen Netzknoten (Ni),
- eine Speichereinheit (12), in welcher ein, insbesondere offline, vorzugsweise mithilfe eines Verfahrens zum bestärkenden Lernen, trainiertes künstliches neuronales Netz (KNN) hinterlegt ist,
- eine Recheneinheit (13), welche dazu ausgeführt ist, die Betriebsparameter (BP) mithilfe des künstlichen neuronalen Netzes (KNN) zu verarbeiten, um Steuerbefehle (SB), insbesondere umfassend optimale Steuerparameter und/oder Stellgrößen, für die verschiedenen Netzknoten (Ni) bereitzustellen,

wobei das künstliche neuronale Netz (KNN) mithilfe eines Trainingsverfahrens nach einem der vorhergehenden Ansprüche trainiert wurde.

12. Netzübergabemodul (10) nach einem der vorhergehenden Ansprüche,
wobei das Netzübergabemodul (10) als ein einzeln handhabbares Modul ausgebildet ist, welches dazu ausgebildet ist, an einer Netzstation (100) befestigt zu werden und eine Steuereinheit für die Netzstation (100) bereitzustellen.

13. Netzstation (100), insbesondere in Form einer Ortsnetzstation oder eines Umspannwerks, vorzugsweise für ein Niederspannungsnetz und/oder ein Mittelspannungsnetz, aufweisend ein Netzübergabemodul (10) nach einem der vorhergehenden Ansprüche.

14. Betriebsverfahren zum Betreiben einer Netzstation (100), insbesondere in Form einer Ortsnetzstation oder eines Umspannwerks, vorzugsweise für ein Niederspannungsnetz und/oder ein Mittelspannungsnetz,

wobei die Netzstation (100) über elektrische Leitungen (L) verschiedene Netzknoten (Ni), vorzugsweise unterschiedliche Verbraucher und/oder unterschiedliche Energieerzeuger, verbindet,
wobei zum Betreiben der Netzstation (100) ein Netzübergabemodul (10) nach einem der vorhergehenden Ansprüche verwendet wird, um optimale Steuerbefehle (SB) für die verschiedenen Netzknoten (Ni) mithilfe eines trainierten künstlichen neuronalen Netzes (KNN) bereitzustellen.

15. Betriebsverfahren nach dem vorhergehenden Anspruch,

wobei im Betrieb der Netzstation (100) Betriebsdaten gesammelt werden, die den synthetischen Trainingsdaten (SD) hinzugefügt werden,
und/oder wobei das künstliche neuronale Netz (KNN) regelmäßig, bspw. bei Änderungen im Netzabschnitt (A), periodisch, bspw. wöchentlich, monatlich und/oder halbjährlich, zum Training an eine Lernstation geschickt wird, um ein Update zu erhalten.

Fig. 1

Fig. 2

Fig. 3

# EP 4 611 209 A1

**EUROPÄISCHER RECHERCHENBERICHT**

Europäisches Patentamt
European Patent Office
Office européen des brevets

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | YANG QINGQING ET AL: "New ANN method for multi-terminal HVDC protection relaying", ELECTRIC POWER SYSTEMS RESEARCH, ELSEVIER, AMSTERDAM, NL, Bd. 148, 7. April 2017 (2017-04-07), Seiten 192-201, XP085027834, ISSN: 0378-7796, DOI: 10.1016/J.EPSR.2017.03.024 * Abbildungen 1,2,6,7 * * Seite 195 - Seite 200 * ----- | 1-15 | INV. H02J3/46 H02J3/00 |
| A | US 2024/039269 A1 (GAUBE SVEN [DE] ET AL) 1. Februar 2024 (2024-02-01) * Abbildungen 3,4 * * Absatz [0076] - Absatz [0079] * ----- | 1,11 | |
| A | CN 114 899 853 A (UNIV HUAIHUA) 12. August 2022 (2022-08-12) * Abbildungen 1,1 * * Absatz [0019] * ----- | 1,11 | |
| A | US 2021/097348 A1 (SHLENS JONATHON [US] ET AL) 1. April 2021 (2021-04-01) * Abbildung 1 * * Absatz [0041] - Absatz [0053] * ----- | 1,11 | RECHERCHIERTE SACHGEBIETE (IPC) H02J G06N |

Der vorliegende Recherchenbericht wurde für alle Patentansprüche erstellt

| Recherchenort | Abschlußdatum der Recherche | Prüfer |
|---|---|---|
| München | 27. Juni 2025 | Despis, Enguerran |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-06-2025

| Im Recherchenbericht angeführtes Patentdokument | Datum der Veröffentlichung | Mitglied(er) der Patentfamilie | Datum der Veröffentlichung |
|---|---|---|---|
| US 2024039269 A1 | 01-02-2024 | EP 4012864 A1 | 15-06-2022 |
| | | US 2024039269 A1 | 01-02-2024 |
| | | WO 2022122441 A1 | 16-06-2022 |
| CN 114899853 A | 12-08-2022 | KEINE | |
| US 2021097348 A1 | 01-04-2021 | DE 202020101701 U1 | 10-07-2020 |
| | | US 2021097348 A1 | 01-04-2021 |
| | | US 2022114400 A1 | 14-04-2022 |
| | | US 2024273410 A1 | 15-08-2024 |

Für nähere Einzelheiten zu diesem Anhang : siehe Amtsblatt des Europäischen Patentamts, Nr. 12/82

EPO FORM P0461